# EUROPEAN PATENT APPLICATION

(11) **EP 4 806 926 A1**
(43) Date of publication of application: **16.09.2026**
(21) Application number: 24888516.2
(22) Date of filing: 22.10.2024
(51) Int. Cl.: C08F 2/50, B41J 2/01, C08F 2/44, C08F 20/10, C09D 11/101

(54) **ULTRAVIOLET-CURABLE COMPOSITION, METHOD FOR PRODUCING CURED OBJECT, CURED OBJECT, ULTRAVIOLET-CURABLE INK, METHOD FOR PRODUCING PRINTED MATTER, AND PRINTED MATTER**

(30) Priority: 09.11.2023 JP 2023191702
(71) Applicant: Mitsubishi Chemical Corporation, Tokyo 100-8251 (JP)
(72) Inventor: KASAI, Kengo, Tokyo 100-8251 (JP); INABA, Keisuke, Tokyo 100-8251 (JP); GOROUMARU, Shiho, Tokyo 100-8251 (JP); NAKAGAWA, Tomoko, Tokyo 100-8251 (JP); MAKINOUCHI, Takahito, Tokyo 100-8251 (JP)
(74) Representative: Hoffmann Eitle
(86) International application number: PCT/JP2024/037549
(87) International publication number: WO 2025/100218

(57) **Abstract**

An ultraviolet-curable composition containing at least a radically polymerizable compound, a polymerization initiator, and at least one solvent, wherein the radically polymerizable compound is present as particles, the polymerization initiator contains a compound having a structure represented by Formula (1) and a structure represented by Formula (2), and when the ultraviolet-curable composition being free of any colorant component is diluted 100-fold relative to a total mass of the ultraviolet-curable composition being free of any colorant component using a solvent with the highest content mass proportion among the at least one solvent, an absorbance measured at a wavelength of 385 nm with an optical path length of 1 cm is 0.40 or more. 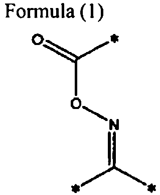 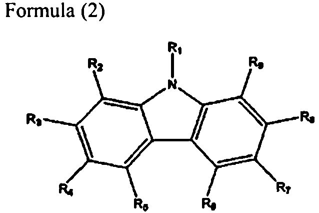 where in Formula (1). * represents a bond to another structure in the compound: and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).

## Description

### Technical Field

The present invention relates to an ultraviolet-curable composition and an ultraviolet-curable ink. The present invention also relates to a cured product produced by curing the ultraviolet-curable composition and to a printed material produced by curing the ultraviolet-curable ink.

### Background Art

In recent years, the demand for inks for inkjet printers has been increasing. Inkjet printers have features such as ease of full-color printing, low noise, the ability to obtain high-resolution images at a low cost, the ability to achieve high-speed printing, the ability to print not only on flat surfaces but also on curved surfaces, and the ability to easily print on large surface areas. Thus, inkjet printers are not limited to personal use; in recent years, they are rapidly spreading as commercial inkjet printers, such as for sign applications, window films, posters, car wrapping, and wallpaper.

For commercial inkjet printers, printed materials are required to have properties, such as (1) high image quality, (2) high coating properties, (3) high-speed printability, (4) substrate versatility, and (5) environmental friendliness and safety. In the case of printing a printed material with a large surface area or a printed material for outdoor use, commercial inkjet printers are further required to provide excellent coating performance, such as water resistance, alcohol resistance, coating strength, and light resistance of the printed film.

Printing inks for commercial inkjet printers known in the art include water-based inks in which a pigment is dispersed in an aqueous medium; solvent-based UV inks in which a pigment and an ultraviolet-curable monomer are dispersed or dissolved in an organic solvent; solvent-free UV inks in which a pigment is dispersed in an ultraviolet-curable monomer without a solvent; water-based latex inks in which a pigment and a resin are dispersed in an aqueous medium; and ultraviolet-curable water-based inks in which a pigment and a UV-curable oligomer are dispersed in an aqueous medium (Patent Literatures 1 and 2). All of these printing inks are required to form a robust ink coating film that provides even better coating film performance, such as water resistance and solvent resistance, and that can withstand long-term use.

### Citation List

### Patent Literature

Patent Literature 1: JP 2004-209976 A
Patent Literature 2: JP 2013-199110 A

### Summary of Invention

### Technical Problem

An object of the present invention is to provide an ultraviolet-curable composition and an ultraviolet-curable ink that provide a coating having even better coating performance, particularly excellent in water resistance and solvent resistance, than those known in the art.

### Solution to Problem

The present inventor has found that an ultraviolet-curable composition and an ultraviolet-curable ink that provide a coating excellent in water resistance and solvent resistance can be achieved by ensuring that a radically polymerizable compound is present as particles, a polymerization initiator contains a specific compound, and an absorbance satisfies specific conditions.

The gist of the present invention is as follows.

[1] An ultraviolet-curable composition containing at least a radically polymerizable compound, a polymerization initiator, and at least one solvent, in which
   the radically polymerizable compound is present as particles,
   the polymerization initiator contains a compound having a structure represented by Formula (1) and a structure represented by Formula (2), and
   when the ultraviolet-curable composition being substantially free of any colorant component, which is hereinafter referred to as "the pre-dilution composition." is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 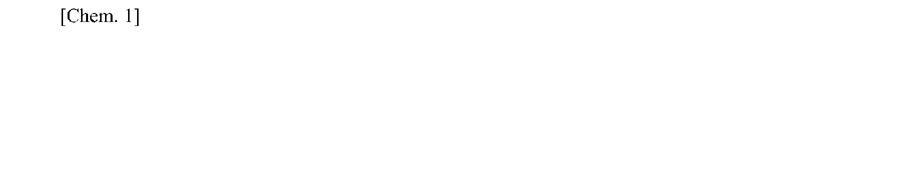 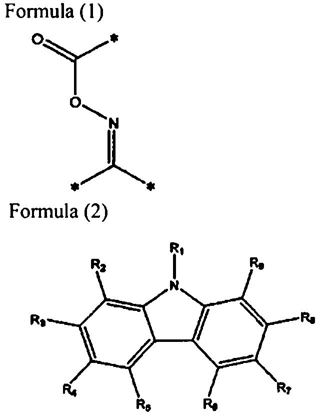 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).
[2] The ultraviolet-curable composition according to [1], in which the at least one solvent contains water.
[3] The ultraviolet-curable composition according to [1] or [2], in which the solvent further contains an organic solvent.
[4] The ultraviolet-curable composition according to any of [1] to [3], further containing one additional polymerization initiator, in which the one additional polymerization initiator contains a compound represented by Formula (3): 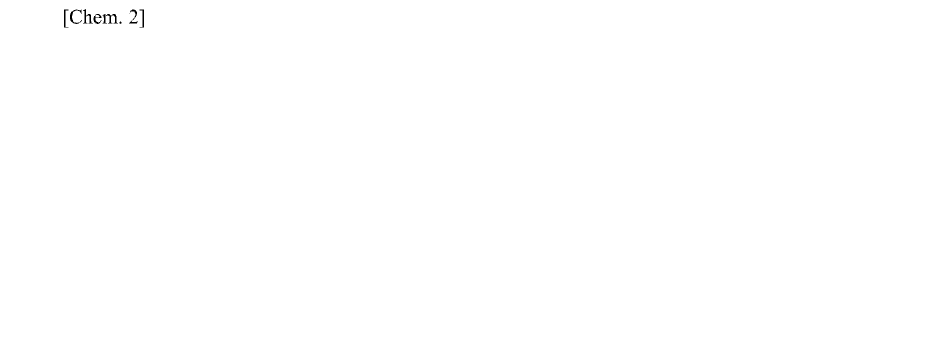 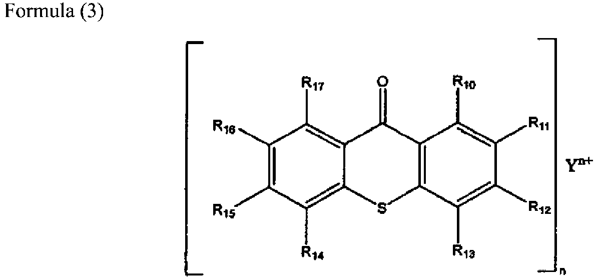 where R₁₀ to R₁₇ each independently represents a hydrogen atom or a substituent, with the proviso that at least one of R₁₀ to R₁₇ is Q⁻, and Q⁻ represents a deprotonated anionic functional group; Yⁿ⁺ represents a counter cation, and n represents an integer of 1 or more.
[5] The ultraviolet-curable composition according to [4], in which, in Formula (3), R₁₃ is Q⁻.
[6] The ultraviolet-curable composition according to [4] or [5], in which, in Formula (3), Q⁻ is a group containing a carboxylate group or a sulfonylate group at a terminal end, and Yⁿ⁺ is any one selected from the group consisting of an alkali metal ion, an alkaline earth metal ion, an ion derived from an organic amine, and an ammonium ion.
[7] The ultraviolet-curable composition according to any of [4] to [6], in which a content ratio (mass ratio) of the compound represented by Formula (3) to the compound having the structure represented by Formula (1) and the structure represented by Formula (2) is 0.01 or more and 800 or less.
[8] The ultraviolet-curable composition according to any of [1] to [7], further containing a surfactant, in which the surfactant is a silicone-based surfactant.
[9] A method for producing a cured product, the method including applying or printing the ultraviolet-curable composition described in any of [1] to [8] onto a substrate surface, and then irradiating the substrate with an active energy ray.
[10] A cured product produced by curing the ultraviolet-curable composition described in any of [1] to [8].
[11] An ultraviolet-curable ink containing at least a radically polymerizable compound, a polymerization initiator, a colorant, and at least one solvent, in which
   the radically polymerizable compound is present as particles,
   the polymerization initiator contains a compound having a structure represented by Formula (1) and a structure represented by Formula (2), and
   when the ultraviolet-curable ink being substantially free of the colorant component, which is hereinafter referred to as "the pre-dilution composition." is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 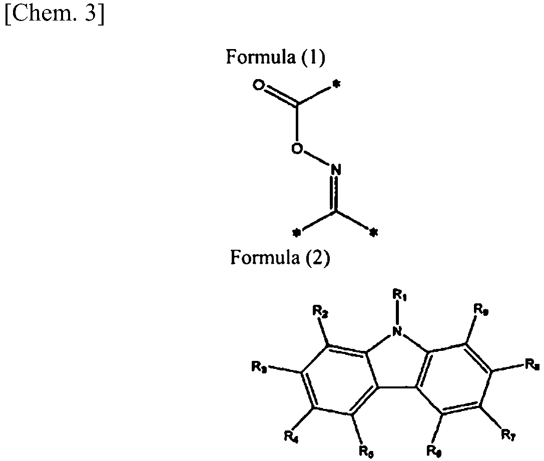 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).
[12] The ultraviolet-curable ink according to [11], in which the at least one solvent contains water.
[13] The ultraviolet-curable ink according to [11] or [12], in which the at least one solvent further contains an organic solvent.
[14] The ultraviolet-curable ink according to any of [11] to [13], further containing one additional polymerization initiator, in which the one additional polymerization initiator contains a compound represented by Formula (3): 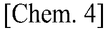 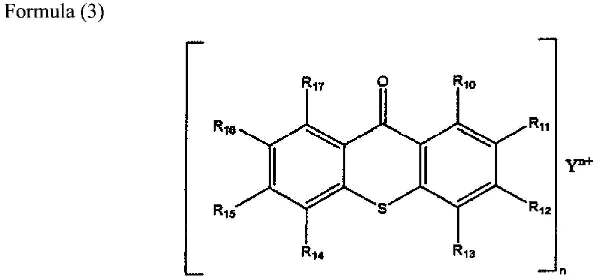 where R₁₀ to R₁₇ each independently represents a hydrogen atom or a substituent, with the proviso that at least one of R₁₀ to R₁₇ is Q⁻, and Q⁻ represents a deprotonated anionic functional group; Yⁿ⁺ represents a counter cation, and n represents an integer of 1 or more.
[15] The ultraviolet-curable ink according to [14], in which, in Formula (3), R₁₃ is Q⁻.
[16] The ultraviolet-curable ink according to [14] or [15] in which, in Formula (3), Q⁻ is a group containing a carboxylate group or a sulfonylate group at a terminal end, and Yⁿ⁺ is any one selected from the group consisting of an alkali metal ion, an alkaline earth metal ion, an ion derived from an organic amine, and an ammonium ion.
[17] The ultraviolet-curable ink according to any of [14] to [16], in which a content ratio (mass ratio) of the compound represented by Formula (3) to the compound having the structure represented by Formula (1) and the structure represented by Formula (2) is 0.01 or more and 800 or less.
[18] The ultraviolet-curable ink according to any of [11] to [17], further containing a surfactant, in which the surfactant is a silicone-based surfactant.
[19] A method for producing a printed material, in which the ultraviolet-curable ink described in any of [11] to [18] is applied or printed onto a substrate surface, and then the substrate is irradiated with an active energy ray.
[20] A printed material produced by curing the ultraviolet-curable ink described in any of [11] to [18].

### Advantageous Effects of Invention

The ultraviolet-curable composition and ultraviolet-curable ink of the present invention provide a cured film or a printed material excellent in coating performance, such as water resistance and solvent resistance.

### Description of Embodiments

Hereinafter, an embodiment of the present invention will be described. However, the present invention is not limited to this embodiment.

In the present invention, the expression "from X to Y" (where X and Y are any numbers) includes the meaning of "X or more and Y or less" as well as the meanings of "preferably more than X" and "preferably less than Y" unless otherwise specified.

In the present invention, the expression "X or more" (where X is any number) or "Y or less" (where Y is any number) also includes the meaning of "preferably more than X" or "preferably less than Y".

### Ultraviolet-Curable Composition

An ultraviolet-curable composition of the present invention (which may hereinafter be referred to as "the composition of the present invention") is an ultraviolet-curable composition containing at least a radically polymerizable compound, a polymerization initiator, and at least one solvent, in which
the radically polymerizable compound is present as particles,
the polymerization initiator contains a compound having a structure represented by Formula (1) and a structure represented by Formula (2), and
when the ultraviolet-curable composition being substantially free of any colorant component, which is hereinafter referred to as "the pre-dilution composition." is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 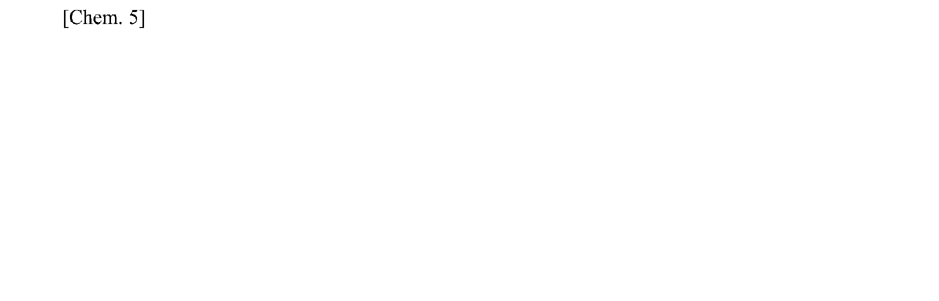 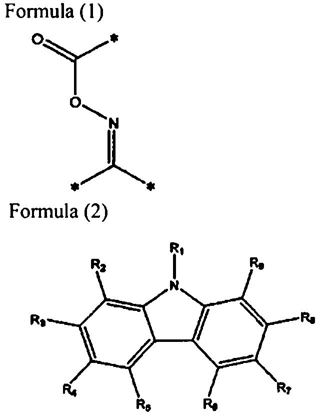 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).

When the pre-dilution composition, that is, the ultraviolet-curable composition of the present invention or an ultraviolet-curable ink of the present invention described later being substantially free of any colorant component, is diluted 100-fold relative to a total mass of the pre-dilution composition using a solvent with the highest content mass proportion among the at least one solvent contained in the ultraviolet-curable composition or the ultraviolet-curable ink, an absorbance measured at a wavelength of 385 nm with an optical path length of 1 cm is 0.40 or more. From the viewpoint of curability, the absorbance is preferably 0.45 or more, more preferably 0.50 or more, and even more preferably 0.52 or more. On the other hand, from the viewpoint of preventing or reducing an unintended curing reaction, the absorbance is preferably 10.0 or less, more preferably 8.0 or less, and even more preferably 6.0 or less. With the absorbance within the range of the upper and lower limit values, the ultraviolet-curable composition or the ultraviolet-curable ink improves the strength of a cured coating, provides sufficiently excellent water resistance and solvent resistance, and facilitates handling.

The absorbance can be determined by placing a sample in a quartz cell with a thickness of 1 cm and measuring with a spectrophotometer (e.g., U4000 (available from Hitachi High-Technologies Corporation)).

As described above, the absorbance is measured in "a state substantially free of any colorant component." Here, the "colorant component" refers to any of various dyes or pigments known as colorants used in inks. In addition, "a state substantially free of any colorant component" means that the content of the colorant component and a component physically or chemically bonded to the colorant component is 0.01 mass% or less in the composition.

As a method for measuring the absorbance in the state described above, for example, an ultraviolet-curable composition or ink prepared using, among the components constituting the ultraviolet-curable composition or ink, a component other than the colorant component and the component physically or chemically bonded to the colorant component may be used as an absorbance measurement sample. Alternatively, the ultraviolet-curable composition or ink may be filtered through a filter or the like with a pore size that allows removal of the colorant component and the component physically or chemically bonded to the colorant component, and this filtrate may be used as an absorbance measurement sample.

In addition, in a case where the type and content of the colorant component contained in the ultraviolet-curable ink can be specified, the absorbance of the ultraviolet-curable ink may be measured by first preparing a colorant-diluted solution using the colorant and a solvent with the highest content mass proportion among the at least one solvent contained in the ultraviolet-curable ink, in such a manner that the concentration of the colorant component is adjusted to the colorant concentration obtained when the ultraviolet-curable ink to be measured is diluted 100-fold, and then using the absorbance of the colorant-diluted solution as a baseline. If the colorant component is available as a colorant dispersion liquid described later, the colorant-diluted solution may be prepared using the colorant dispersion liquid.

For an ultraviolet-curable composition that is free of a colorant component from the beginning, an absorbance measurement sample is prepared by diluting the ultraviolet-curable composition 100-fold relative to a total mass of the ultraviolet-curable composition using a solvent with the highest content mass proportion among the at least one solvent.

In a case where the ultraviolet-curable composition or ink is an aqueous composition, that is, in a case where a solvent with the highest content mass proportion among the at least one solvent is water, the absorbance is measured by diluting the ultraviolet-curable composition or ink with water.

In a case where the ultraviolet-curable composition or ink contains a plurality of solvents in the same content mass proportion, the ultraviolet-curable composition or ink is diluted with each of the plurality of solvents to determine individual absorbances, among which the highest value is used as the absorbance.

In the examples described later, the absorbance was measured for ultraviolet-curable compositions produced without using a pigment dispersion liquid.

Water contained in the pigment dispersion liquid serves as a "solvent" in the ultraviolet-curable ink prepared using this pigment dispersion liquid. Thus, in the examples described later, a net "state substantially free of any colorant component" was achieved by separately adding water in an amount equivalent to the amount of the solvent decreased by not using the pigment dispersion liquid. That is, in the examples described later, the amount of water corresponding to that of water contained in the pigment dispersion liquid separately added is included in "Residue" in Table 1.

To produce the ultraviolet-curable composition of the present invention or the ultraviolet-curable ink of the present invention satisfying the absorbance described above, a compound having a structure represented by Formula (1) and a structure represented by Formula (2) described later is used as a polymerization initiator, and according to the structures in this compound, the substituents in Formula (2), and the like, the content of the polymerization initiator is adjusted, and the type and content of a polymerization initiator used in combination as necessary is adjusted.

That is, for example, a higher content of the polymerization initiator described later tends to increase the absorbance, whereas a lower content tends to decrease the absorbance. Thus, the absorbance can be achieved by controlling the type, combination, and content of the polymerization initiator described later according to the desired absorbance.

The form of use of the ultraviolet-curable composition of the present invention is not particularly limited; the ultraviolet-curable composition of the present invention can be used in coating materials, adhesives, paints, clear inks, and the like.

An ultraviolet-curable ink of the present invention can be prepared by adding a colorant described later to the ultraviolet-curable composition of the present invention. For the colorant, one color or two or more colors may be added. The tint of the ink can be adjusted to a desired tint by optionally adding colorants of two or more colors.

### Ultraviolet-Curable Ink

An ultraviolet-curable ink of the present invention (which may hereinafter be referred to as "the ink of the present invention") is an ultraviolet-curable ink containing at least a radically polymerizable compound, a polymerization initiator, a colorant, and at least one solvent, in which
the radically polymerizable compound is present as particles,
the polymerization initiator contains a compound having a structure represented by Formula (1) and a structure represented by Formula (2), and
when the ultraviolet-curable ink being substantially free of the colorant component, which is hereinafter referred to as "the pre-dilution composition." is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 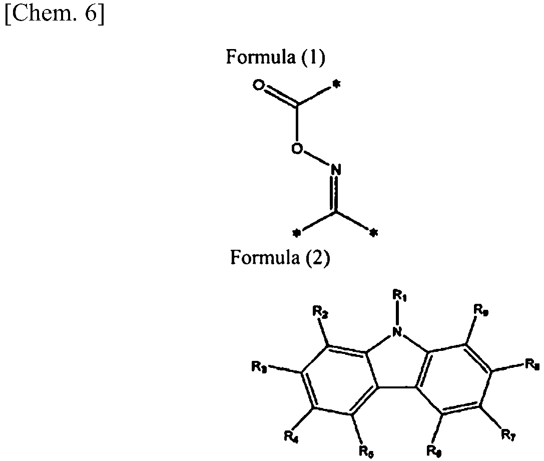 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).

Regarding the ultraviolet-curable ink of the present invention, the preferred value of the absorbance and the method for measuring the absorbance are as described above.

The ink of the present invention is suitably used for inkjet printing.

The ultraviolet-curable composition and ultraviolet-curable ink of the present invention are ultraviolet-curable, but the active energy ray used for curing is not limited to ultraviolet light.

The ultraviolet-curable composition and ultraviolet-curable ink of the present invention may be cured not only by an active energy ray but also, for example, by heat.

### Radically Polymerizable Compound

The presence or absence of ionicity of the radically polymerizable compound used in the present invention is not particularly limited, and the radically polymerizable compound may be nonionic or ionic (anionic, cationic, or amphoteric). The radically polymerizable compound used in the present invention has the same ionicity as that of the other materials or is nonionic. This prevents or reduces aggregation with the other materials and thus can enhance the storage stability of the ultraviolet-curable composition or the ultraviolet-curable ink.

Here, the term "nonionic" means that, for example, the hydrophilic group of the radically polymerizable compound is composed of an ether bond or a hydroxy group that is not ionically dissociated in water. The term "ionic (anionic, cationic, or amphoteric)" means, for example, that the radically polymerizable compound has a carboxy group or an amino group that can be ionically dissociated in water. More specifically, examples of the anionic radically polymerizable compound include radically polymerizable compounds containing a carboxy group.

The radically polymerizable compound is not particularly limited as long as it has one or more radically polymerizable groups in the molecule. The number of radically polymerizable groups in the molecule is preferably 2 or more and more preferably 3 or more, and is preferably 15 or less.

Examples of the radically polymerizable group contained in the radically polymerizable compound include a (meth)acryloyl group, a vinyl group, and a vinyl ether group. Among these, a (meth)acryloyl group is preferred from the viewpoint of ease of radical polymerization.

In the present invention, the term "(meth)acrylate" means acrylate or methacrylate. The same applies to the term "(meth)acryloyl."

One radically polymerizable compound may be used alone, or two or more in combination.

The radically polymerizable compound having one (meth)acryloyl group in the molecule as a radically polymerizable group is not particularly limited. Examples of the radically polymerizable compound include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, lactone-modified flexible (meth)acrylate, t-butylcyclohexyl (meth)acrylate, dicyclopentenyl (meth)acrylate, dicyclopentenyloxyethyl (meth)acrylate, and glycidyl (meth)acrylate.

The radically polymerizable compound having two (meth)acryloyl groups in the molecule as radically polymerizable groups is not particularly limited. Examples of the radically polymerizable compound include triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, ethylene oxide (EO) adduct di(meth)acrylate of bisphenol A, propylene oxide (PO) adduct di(meth)acrylate of bisphenol A, hydroxypivalic acid neopentyl glycol di(meth)acrylate, and polytetramethylene glycol di(meth)acrylate.

The radically polymerizable compound having three or more (meth)acryloyl groups in the molecule as radically polymerizable groups is not particularly limited. Examples of the radically polymerizable compound include trimethylolpropane tri(meth)acrylate, ethylene oxide-modified trimethylolpropane tri(meth)acrylate, propylene oxide-modified trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, ditrimethylolpropane tetra(meth)acrylate, glycerol tri(meth)acrylate, glycerin ethoxy tri(meth)acrylate, glycerin propoxy tri(meth)acrylate, caprolactone-modified trimethylolpropane tri(meth)acrylate, pentaerythritol ethoxy tetra(meth)acrylate, epichlorohydrin-modified trimethylolpropane tri(meth)acrylate, tripentaerythritol octa(meth)acrylate, tetrapentaerythritol deca(meth)acrylate, polypentaerythritol poly(meth)acrylate, and caprolactone-modified dipentaerythritol hexa(meth)acrylate.

As the radically polymerizable compound, an oligomer or polymer having one or more radically polymerizable groups in the molecule can also be used. Among these, an oligomer or polymer having one or more (meth)acryloyl groups in the molecule is preferred. The oligomer or polymer having one or more (meth)acryloyl groups in the molecule is not particularly limited. Examples of the oligomer or polymer include polyester (meth)acrylate, urethane (meth)acrylate, epoxy (meth)acrylate, acrylic resin (meth)acrylate, polyether (meth)acrylate, oligo (meth)acrylate, alkyd (meth)acrylate, and polyol (meth)acrylate.

The radically polymerizable compound used in the present invention is present as particles in the ultraviolet-curable composition or the ultraviolet-curable ink.

In the present invention, the wording "present as particles" means that when the particle size distribution is measured at 25°C by the dynamic light scattering method using a particle size analyzer (e.g., NANOTRAC WAVE II available from MicrotracBEL Corp.), a peak is observed in a region where the particle size is larger than 1 nm.

In the present invention, even if the radically polymerizable compound is aggregated and/or contains another substance in the particles, the state of being "present as particles" includes such a state as long as the radically polymerizable compound is present as particles.

When the particle size distribution is measured, the composition or ink is measured without dilution; however, if the scattering intensity is too high for accurate measurement in an undiluted state, the composition or ink may be diluted 100-fold for the measurement.

The ultraviolet-curable composition or ultraviolet-curable ink in which the radically polymerizable compound present as particles can provided a cured product or printed material having good water resistance and good solvent resistance.

The radically polymerizable compound is stably present as particles, and thus an amphiphilic radically polymerizable compound may be used as the radically polymerizable compound. The amphiphilic radically polymerizable compound is not particularly limited as long as it is a compound having a radically polymerizable group and a hydrophilic group. Examples of the amphiphilic radically polymerizable compound include a macromonomer or urethane (meth)acrylate having a (meth)acryloyl group or a vinyl ether group as a radically polymerizable group and a polyalkylene glycol or an ionic group as a hydrophilic group, and a compound produced by reacting a polyisocyanate compound (A) described later, the following compound (B'), and the following compound (C').
Compound (B'): A compound that contains a polymerizable unsaturated bond and can bond to the polyisocyanate compound (A)
Compound (C'): A water-soluble compound that can bond to the polyisocyanate compound (A)

The compound produced by reacting the polyisocyanate compound (A), the compound (B'), and the compound (C') will be described in greater detail below.

Examples of the structure of the compound (B') that can bond to the polyisocyanate compound (A) include a hydroxy group, a carboxy group, and an amino group. Examples of the polymerizable unsaturated bond include a carbon-carbon double bond and a carbon-carbon triple bond; among these, a carbon-carbon double bond is preferred. More specific examples include carbon-carbon double bonds derived from a vinyl group, a (meth)acryloyl group, or the like.

The water-soluble compound of the compound (C') includes a water-soluble polymer. Specific examples of the compound (C') include polyglycerin, poly(hydroxy(meth)acrylate), polyamine, quaternary aminated polystyrene, sulfonated polystyrene, polyether, and polyalkylene glycol. Among these, polyglycerin, poly(hydroxy(meth)acrylate), and polyalkylene glycol are preferred, and polyalkylene glycol is particularly preferred. Each of these water-soluble compounds may be a copolymer. The compound (C') has a structure of such a water-soluble compound and a structure that can bond to the polyisocyanate compound (A). Here, the "structure that can bond to the polyisocyanate compound (A)" is the same as that of the above-mentioned compound (B').

The polyisocyanate compound (A), the compound (B'), and the compound (C') may additionally have other structures.

### Polyisocyanate Compound (A)

The polyisocyanate compound (A) is a compound having a total of two or more isocyanate groups per molecule.

The type of polyisocyanate compound (A) is not particularly limited, and examples include chain aliphatic polyisocyanates, aromatic polyisocyanates, and alicyclic polyisocyanates. Among these, the polyisocyanate compound (A) preferably includes a trimer compound of polyisocyanate from the viewpoints of weather resistance and hardness.

The chain aliphatic polyisocyanate is a compound having a chain aliphatic structure and two or more isocyanate groups. The chain aliphatic polyisocyanate is preferred from the viewpoints of weather resistance and stretchability. The chain aliphatic structure in the chain aliphatic polyisocyanate is not particularly limited but is preferably a linear or branched alkylene group with 1 to 12 carbons and preferably with 1 to 6 carbons. Examples of the chain aliphatic polyisocyanate include aliphatic diisocyanates, such as tetramethylene diisocyanate, hexamethylene diisocyanate, trimethylhexamethylene diisocyanate, and dimer acid diisocyanate, or trimer compounds of these polyisocyanates.

The aromatic polyisocyanate is a compound having an aromatic structure and two or more isocyanate groups. The aromatic polyisocyanate is preferred from the viewpoint of the strength of the cured product. The aromatic structure of the aromatic polyisocyanate is not particularly limited but is preferably an aromatic structure with 6 to 13 carbons. Examples of the aromatic polyisocyanate include aromatic diisocyanates, such as tolylene diisocyanate, xylylene diisocyanate, diphenylmethane diisocyanate, m-phenylene diisocyanate, and naphthalene diisocyanate and trimer compounds of these polyisocyanates.

The alicyclic polyisocyanate is a compound having an alicyclic structure and two or more isocyanate groups. The alicyclic structure in the alicyclic polyisocyanate is not particularly limited but usually has 5 or more and preferably 6 or more, and usually 15 or less, preferably 14 or less, and more preferably 13 or less carbons. The alicyclic structure is particularly preferably a cycloalkylene group. Examples of the alicyclic polyisocyanate include diisocyanates having an alicyclic structure, such as bis(isocyanatomethyl) cyclohexane, cyclohexane diisocyanate, bis(isocyanatocyclohexyl) methane, and isophorone diisocyanate, or trimer compounds of these polyisocyanates.

Only one of these polyisocyanate compounds (A) may be used alone, or two or more in combination.

As the polyisocyanate compound (A), a polyisocyanate having two or more structures among a chain aliphatic structure, an aromatic structure, and an alicyclic structure can also be used.

Particularly from the viewpoint of adhesion to a substrate, the polyisocyanate compound (A) preferably has 3 or more isocyanate groups while preferably has 6 or less isocyanate groups. The polyisocyanate compound (A) is preferably a trimer produced by a trimerization reaction of hexamethylene diisocyanate, trimethylhexamethylene diisocyanate, phenylene diisocyanate, or the like, and particularly preferably a trimer of hexamethylene diisocyanate.

### Compound (B')

The compound (B') is a compound that contains a polymerizable unsaturated bond and can bond to the polyisocyanate compound (A).

The compound (B') is preferably a hydroxy group-containing (meth)acrylate because of excellent ultraviolet curability, fixability, solvent resistance, and the like. The compound (B') is more preferably a hydroxy group-containing polyfunctional (meth)acrylate (B) because it forms a good crosslinked structure, which can improve the physical properties of the cured product, such as stain resistance and abrasion resistance.

The hydroxy group-containing polyfunctional (meth)acrylate (B) preferably has 3 or less, more preferably 2 or less, and even more preferably 1 hydroxy group. The hydroxy group-containing polyfunctional (meth)acrylate (B) preferably has 8 or less (meth)acryloyl groups, and more preferably 6 or less (meth)acryloyl groups.

Examples of the hydroxy group-containing polyfunctional (meth)acrylate (B) include pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2-hydroxy-1,3-dimethacryloxypropane, and 2-hydroxy-3-acryloyloxypropyl methacrylate.

Only one of these hydroxy group-containing polyfunctional (meth)acrylates (B) may be used alone, or two or more in combination.

Particularly from the viewpoint of the strength of the resulting cured product, the hydroxy group-containing polyfunctional (meth)acrylate (B) preferably has 1 hydroxy group and 3 or more and 5 or less (meth)acryloyl groups; for example, dipentaerythritol penta(meth)acrylate or pentaerythritol tri(meth)acrylate. The hydroxy group-containing polyfunctional (meth)acrylate (B) is preferably dipentaerythritol penta(meth)acrylate particularly because it forms a good crosslinked structure and increases the mechanical strength of the cured film.

### Compound (C')

The compound (C') is a water-soluble compound that can bond to the polyisocyanate compound (A).

As described above, examples of the compound (C') include water-soluble polymers, and among these, a polyalkylene glycol (C) is particularly preferred.

The polyalkylene glycol (C) is not limited, but a mono-substituted structure is preferred. That is, one hydroxy group of the glycol is preferably replaced. The substituted structure is preferably a structure that does not bond to isocyanate.

The polyalkylene glycol (C) may be a mixture of a compound with a mono-substituted structure and a compound without a mono-substituted structure.

The molecular weight of the polyalkylene glycol (C) (meaning the number average molecular weight for a polydispersed polyalkylene glycol (C)) is not limited but is usually 100 or more and preferably 200 or more, and usually 5000 or less and preferably 2000 or less.

Among the polyalkylene glycols (C), a polyalkylene glycol mono-substituted ether is preferred, and among the polyalkylene glycol mono-substituted ethers, a polyalkylene glycol mono-substituted ether not containing an ionic substituent in the ether moiety is more preferred. The polyalkylene glycol (C) is even more preferably, for example, a compound represented by Formula (4): 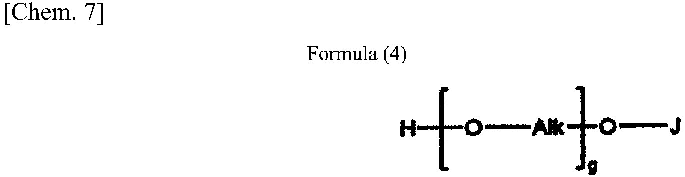 where Alk is an alkylene group, J is any of an alkyl group, a (meth)acryloyl group, an allyl group, an acyl group, or a hydrogen atom, and g is an integer of 2 or more.

Alk in Formula (4) is preferably an alkylene group with 1 or more and 3 or less carbons, and among these, Alk is more preferably an ethylene group, a trimethylene group, or a propylene group, and even more preferably an ethylene group from the viewpoint of storage stability.

From the viewpoint of the strength of the cured product, J is preferably a (meth)acryloyl group, an allyl group, or an acyl group, and is more preferably an allyl group.

From the viewpoint of the strength of the resulting cured product, g in Formula (4) is usually 2 or more, preferably 5 or more, and more preferably 6 or more, and usually 500 or less, preferably 100 or less, and more preferably 50 or less.

Only one of these polyalkylene glycols (C) may be used alone, or two or more in combination. The polyalkylene glycol (C) may be a mixture of polyalkylene glycols with different molecular weights (compounds differing in g in Formula (4)).

### Weight Average Molecular Weight

In a case where the radically polymerizable compound is a polymer, from the viewpoints of the performance and handling properties of the cured product, the weight average molecular weight determined by gel permeation chromatography (GPC) in terms of polystyrene is preferably 1000 or more and more preferably 2000 or more, and is preferably 100000 or less and more preferably 50000 or less.

### Average Particle Size

In the ultraviolet-curable composition and ultraviolet-curable ink of the present invention, the radically polymerizable compound is present as particles. The average particle size of the particles is preferably 10 nm or more and 250 nm or less, and more preferably 20 nm or more and 200 nm or less. The average particle size within the above range provides the radically polymerizable compound with good dispersion stability.

The average particle size of the radically polymerizable compound is, for example, a volume average particle size (D₅₀) measured using a particle size analyzer according to the dynamic light scattering method.

In the examples described later, the average particle size of the radically polymerizable compound particles in an aqueous dispersion liquid of the radically polymerizable compound is measured; this average particle size of the radically polymerizable compound particles in the aqueous dispersion liquid is substantially equivalent to the average particle size of the radically polymerizable compound particles in the ultraviolet-curable composition and ultraviolet-curable ink.

The average particle size of the radically polymerizable compound means the particle size (primary particle size) of the radically polymerizable compound particles.

### Colorant

The ultraviolet-curable ink of the present invention contains a colorant.

As the colorant used in the ultraviolet-curable ink of the present invention, any of various dyes or pigments known as colorants used in inks can be used. From the viewpoints of irradiation with ultraviolet light and long-term storage durability of printed images, a pigment is preferably used as the colorant.

### Dye

The dye that can be used in the present invention is not particularly limited, and examples include water-soluble dyes, such as acid dyes, direct dyes, and reactive dyes; and disperse dyes. Among these, an anionic dye is preferred.

### Water-Soluble Dye

Examples of the water-soluble dye include azo dyes, methine dyes, azomethine dyes, xanthene dyes, quinone dyes, phthalocyanine dyes, triphenylmethane dyes, and diphenylmethane dyes. Examples of its specific compound are as shown below; however, the water-soluble dye is not limited to these exemplified compounds.

### C.I. Acid Yellow

1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246

### C.I. Acid Orange

3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168

### C.I. Acid Red

88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415

### C.I. Acid Violet

17, 19, 21, 42, 43, 47, 48, 49, 54, 66, 78, 90, 97, 102, 109, 126

### C.I. Acid Blue

1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350

### C.I. Acid Green

9, 12, 16, 19, 20, 25, 27, 28, 40, 43, 56, 73, 81, 84, 104, 108, 109

### C.I. Acid Brown

2, 4, 13, 14, 19, 28, 44, 123, 224, 226, 227, 248, 282, 283, 289, 294, 297, 298, 301, 355, 357, 413

### C.I. Acid Black

1, 2, 3, 24, 26, 31, 50, 52, 58, 60, 63, 107, 109, 112, 119, 132, 140, 155, 172, 187, 188, 194, 207, 222

### C.I. Direct Yellow

8, 9, 10, 11, 12, 22, 27, 28, 39, 44, 50, 58, 79, 86, 87, 98, 105, 106, 130, 132, 137, 142, 147, 153

### C.I. Direct Orange

6, 26, 27, 34, 39, 40, 46, 102, 105, 107, 118

### C.I. Direct Red

2, 4, 9, 23, 24, 31, 54, 62, 69, 79, 80, 81, 83, 84, 89, 95, 212, 224, 225, 226, 227, 239, 242, 243, 254

### C.I. Direct Violet

9, 35, 51, 66, 94, 95

### C.I. Direct Blue

1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291

### C.I. Direct Green

26, 28, 59, 80, 85

### C.I. Direct Brown

44, 106, 115, 195, 209, 210, 222, 223

### C.I. Direct Black

17, 19, 22, 32, 51, 62, 108, 112, 113, 117, 118, 132, 146, 154, 159, 169

### C.I. Basic Yellow

1, 2, 11, 13, 15, 19, 21, 28, 29, 32, 36, 40, 41, 45, 51, 63, 67, 70, 73, 91

### C.I. Basic Orange

2, 21, 22

### C.I. Basic Red

1, 2, 12, 13, 14, 15, 18, 23, 24, 27, 29, 35, 36, 39, 46, 51, 52, 69, 70, 73, 82, 109

### C.I. Basic Violet

1, 3, 7, 10, 11, 15, 16, 21, 27, 39

### C.I. Basic Blue

1, 3, 7, 9, 21, 22, 26, 41, 45, 47, 52, 54, 65, 69, 75, 77, 92, 100, 105, 117, 124, 129, 147, 151

### C.I. Basic Green

1, 4

### C.I. Basic Brown

1

### C.I. Reactive Yellow

2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176

### C.I. Reactive Orange

1, 4, 5, 7, 11, 12, 13, 15, 16, 20, 30, 35, 56, 64, 67, 69, 70, 72, 74, 82, 84, 86, 87, 91, 92, 93, 95, 107

### C.I. Reactive Red

2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235

### C.I. Reactive Violet

1, 2, 4, 5, 6, 22, 23, 33, 36, 38

### C.I. Reactive Blue

2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236

### C.I. Reactive Green

8, 12, 15, 19, 21

### C.I. Reactive Brown

2, 7, 9, 10, 11, 17, 18, 19, 21, 23, 31, 37, 43, 46

### C.I. Reactive Black

5, 8, 13, 14, 31, 34, 39

### C.I. Food Black

1, 2

### Pigment

For the pigment, organic and inorganic pigments known in the art can be used.

Examples of the pigment include azo pigments, such as azo lake, insoluble azo pigments, condensed azo pigments, and chelate azo pigments; polycyclic pigments, such as phthalocyanine pigments, perylene and perylene pigments, anthraquinone pigments, quinacridone pigments, dioxazine pigments, thioindigo pigments, isoindolinone pigments, and quinophthalone pigments; dye lakes, such as basic dye lakes and acid dye lakes; organic pigments, such as nitro pigments, nitroso pigments, aniline black, and daylight fluorescent pigments; and inorganic pigments, such as carbon black, titanium oxide, and iron oxide-based pigments. The pigment is preferably an anionic pigment.

### Organic Pigment

Specific examples of the organic pigment are indicated below.

### Magenta or Red Pigment

C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222, and the like

### Orange or Yellow Pigment

C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 155, and the like

### Green or Cyan Pigment

C.I. Pigment Blue 15, C.I. Pigment Blue 15:2, C.I. Pigment Blue 15:3, C.I. Pigment Blue 16, C.I. Pigment Blue 60, C.I. Pigment Green 7, and the like

Only one of these dyes and pigments may be used alone, or two or more in combination.

### Solvent

The ultraviolet-curable composition and ultraviolet-curable ink of the present invention contain a solvent. The solvent preferably contains water and more preferably further contains an organic solvent.

That is, the solvent used in the present invention is more preferably a mixture of water and an organic solvent.

The organic solvent is preferably a water-soluble organic solvent. Water-soluble organic solvents include those that function as a moisture-retention solvent to enhance moisture retention and wettability, and those used as an aqueous medium to adjust viscosity and improve handling properties and ejection properties in inkjet printing. The two types are not clearly distinguished from each other; the water-soluble organic solvent used as a moisture-retention solvent also functions as a solvent.

In the present invention, the water-soluble organic solvent means a compound having solubility in water, and the solubility in water is not limited; however, a compound that can be dissolved in water in any proportion is preferred. In addition, even a compound that is difficult to have properties as a solvent by itself (e.g., a compound that is solid or has high viscosity at ordinary temperature) is included in the water-soluble organic solvent as long as it can be used as a solvent by uniform mixing with water.

Examples of the water-soluble organic solvent include polyhydric alcohols; ethers, such as polyhydric alcohol alkyl ethers and polyhydric alcohol aryl ethers; nitrogen-containing heterocyclic compounds; amides; amines; and sulfur-containing compounds.

Specific examples of the water-soluble organic solvent include polyhydric alcohols, such as ethylene glycol, diethylene glycol, 1,2-propanediol (propylene glycol), 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyhydric alcohol alkyl ethers, such as ethylene glycol monoethyl ether, ethylene glycol monobutyl ether, diethylene glycol monomethyl ether, diethylene glycol monoethyl ether, diethylene glycol ethyl methyl ether, diethylene glycol monobutyl ether, tetraethylene glycol monomethyl ether, propylene glycol monomethyl ether, and propylene glycol monoethyl ether; polyhydric alcohol aryl ethers, such as ethylene glycol monophenyl ether and ethylene glycol monobenzyl ether; nitrogen-containing heterocyclic compounds, such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides, such as formamide, N-methylformamide, N,N-dimethylformamide, 3-methoxy-N,N-dimethylpropionamide, and 3-butoxy-N,N-dimethylpropionamide; amines, such as monoethanolamine, diethanolamine, and triethylamine; sulfur-containing compounds, such as dimethyl sulfoxide, sulfolane, and thiodiethanol; and propylene carbonate and ethylene carbonate.

Among these, propylene glycol or diethylene glycol ethyl methyl ether is preferred.

An organic solvent with a boiling point of 250°C or lower is preferably used as the water-soluble organic solvent because such an organic solvent not only functions as a moisture-retention solvent but also provides good drying properties.

A polyol compound with 8 or more carbons and a glycol ether compound are also suitably used as the water-soluble organic solvent.

Specific examples of the polyol compound with 8 or more carbons include 2-ethyl-1,3-hexanediol and 2,2,4-trimethyl-1,3-pentanediol.

Specific examples of the glycol ether compound include polyhydric alcohol alkyl ethers, such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers, such as ethylene glycol monophenyl ether and ethylene glycol monobenzyl ether.

Only one of these water-soluble organic solvents may be used alone, or two or more in combination.

Examples of the water-insoluble organic solvent include esters, such as butyl acetate and ethyl propionate; and ketones, such as methyl ethyl ketone and cyclohexanone.

### Polymerization Initiator

The polymerization initiator used in the present invention is preferably a photoradical polymerization initiator that generates radicals as active species by energy of light (ultraviolet light) received upon irradiation with ultraviolet light, and initiates photopolymerization of the radically polymerizable compound. This cures the ultraviolet-curable composition or the ultraviolet-curable ink.

The polymerization initiator may be dissolved in the solvent in a state of not being encapsulated in the particles of the radically polymerizable compound, or may be contained in the solvent in a state of being encapsulated in the particles of the radically polymerizable compound. Furthermore, the polymerization initiator may be contained in both of these states.

The ultraviolet-curable composition and ultraviolet-curable ink of the present invention contain, as a polymerization initiator, a compound having a structure represented by Formula (1) and a structure represented by Formula (2): 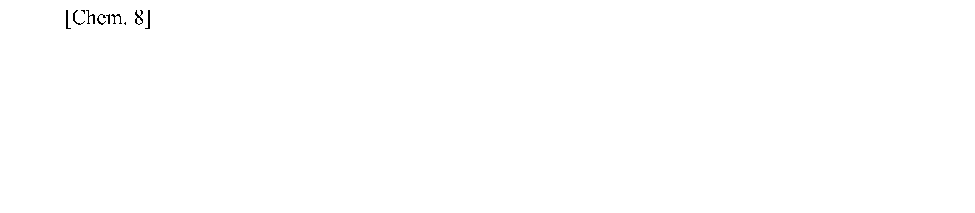 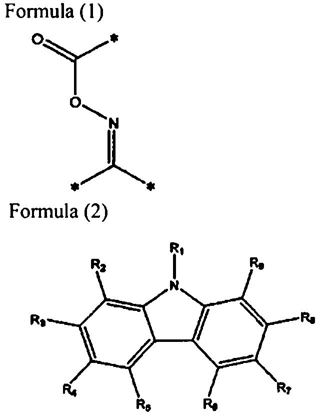 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).

Using a compound having the structure represented by Formula (1) and the structure represented by Formula (2) as a polymerization initiator increases sensitivity to long-wavelength ultraviolet light. Specifically, this facilitates curing with long-wavelength ultraviolet light of 350 to 400 nm. Furthermore, combined use of a substance that increases absorbance in a wavelength region of 350 to 400 nm (e.g., a polymerization initiator having a structure different from the above structure), as described later, further promotes the curing reaction by ultraviolet light and provides a cured coating having high hardness.

The molecular weight of the compound having the structure represented by Formula (1) and the structure represented by Formula (2) is not particularly limited but is preferably 100 or more and more preferably 200 or more, and preferably 5000 or less and particularly preferably 1000 or less.

The compound having the structure represented by Formula (1) and the structure represented by Formula (2) preferably has one each of the structure represented by Formula (1) and the structure represented by Formula (2).

The structure represented by Formula (1) represents an oxime ester bond. Irradiation with ultraviolet light cleaves the N-O bond in the structure represented by Formula (1) and generates a radical.

Among the three bonds * in the structure represented by Formula (1), the bond on the carbonyl group side is preferably bonded to an alkyl group, such as a methyl group, an ethyl group, a propyl group, an isopropyl group, a butyl group, an isobutyl group, a tertiary butyl group, a pentyl group, a neopentyl group, or a hexyl group; among these, the bond is preferably bonded to a methyl group.

One of the two bonds on the -N=C- group side is preferably bonded to the structure represented by Formula (2), and the other is preferably bonded to a monovalent organic residue. Here, examples of the monovalent organic residue include those exemplified below as the monovalent organic residue of R₁ to R₉ in the structure represented by Formula (2). The monovalent organic residue is particularly preferably an aryl group having an alkoxy group having a halogen group as a substituent.

In Formula (2), R₁ to R₉ each independently represent a hydrogen atom, a monovalent organic residue, or a bond to another structure in the compound, and at least one of R₁ to R₉ is a bond to the structure represented by Formula (1). Among R₁ to R ₉, adjacent monovalent organic residues may be bonded to each other to form a ring fused to the carbazole ring in Formula (2).

Examples of the monovalent organic residue include, but are not limited to, an acyl group, an alkyl group, an alkoxy group, an aryl group, and an aryloxy group. These may further have a substituent.

Examples of the acyl group include, but are not limited to, an acetyl group, a propanoyl group, and a benzoyl group.

Examples of the alkyl group include, but are not limited to, a methyl group, an ethyl group, a propyl group, an isopropyl group, a butyl group, an isobutyl group, a tertiary butyl group, a pentyl group, a neopentyl group, and a hexyl group.

Examples of the alkoxy group include, but are not limited to, a methoxy group, an ethoxy group, a propoxy group, and a butoxy group.

The aryl group is not particularly limited as long as it has an aromatic ring structure; examples include a phenyl group, a benzyl group, a 1-naphthyl group, and a 2-naphthyl group.

Examples of the aryloxy group include a phenoxy group, a 1-naphthoxy group, and a 2-naphthoxy group.

Examples of the substituent include, but are not limited to, an alkyl group such as a methyl group or an ethyl group, an alkanol group such as a methylol group or an ethylol group, an alkoxy group such as a methoxy group or an ethoxy group, a halogeno group such as a chloro group or a bromo group, a carboxy group, an amino group, and a nitro group.

In the case where adjacent monovalent organic residues among R₁ to R₉ are bonded to each other to form a ring fused to the carbazole ring in Formula (2), examples of the ring include a benzene ring.

Among R₁ to R₉, the bond to the structure represented by Formula (1) is preferably R₄ or R₇.

As the polymerization initiator used in the present invention, a polymerization initiator containing a compound having the structure represented by Formula (1) and the structure represented by Formula (2) may be used alone, or two or more of such polymerization initiators may be used in combination. In addition, one or more compounds having the structure represented by Formula (1) and the structure represented by Formula (2) may be used in combination with one or more additional polymerization initiators other than the compound having the structure represented by Formula (1) and the structure represented by Formula (2).

### Additional Polymerization Initiator

The additional polymerization initiator may be water-soluble or fat-soluble. For the additional polymerization initiator, not only a photoradical polymerization initiator but also a thermal radical polymerization initiator can be used.

The additional polymerization initiator is preferably a compound represented by Formula (3). Combined use of a polymerization initiator containing the compound represented by Formula (3) can further improve the curability of the ultraviolet-curable composition or the ultraviolet-curable ink. 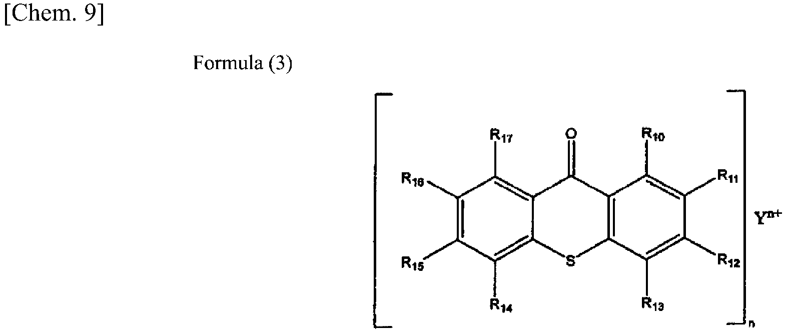 where R₁₀ to R₁₇ each independently represents a hydrogen atom or a substituent, with the proviso that at least one of R₃₀ to R₁₇ is Q⁻, and Q⁻ represents a deprotonated anionic functional group; Yⁿ⁺ represents a counter cation, and n represents an integer of 1 or more.

Examples of the substituent in R₁₀ to R₁₇ include the same substituents as those exemplified above as the substituent that may be contained in the monovalent organic residue in R₁ to R₉.

R₁₀ to R₁₇ other than Q⁻ are each independently preferably a hydrogen atom or an alkanol group, and more preferably a hydrogen atom.

Examples of the deprotonated anionic functional group include a group containing a carboxylate group or a sulfonylate group at a terminal end, a carboxylate group, and a sulfonylate group. Among these, a carboxylate group or a sulfonylate group is preferred, and a carboxylate group is more preferred.

In addition, R₁₃ among R₁₀ to R₁₇ is preferably Q⁻.

Examples of the counter cation of Yⁿ⁺ in Formula (3) preferably include any of an alkali metal ion, an alkaline earth metal ion, an ion derived from an organic amine, or an ammonium ion.

Examples of the alkali metal ion include a lithium ion, a sodium ion, and a potassium ion.

Examples of the alkaline earth metal ion include a magnesium ion and a calcium ion.

Examples of the ion derived from an organic amine include a monoalkylammonium ion, a dialkyl ammonium ion, a trialkyl ammonium ion, a trialcohol ammonium ion, a monoalkyl dialcohol ammonium ion, and a dialkyl monoalcohol ammonium ion.

Among these, from the viewpoint of curability, the counter cation is preferably an alkali metal ion or an ion derived from an organic amine, more preferably a lithium ion, a sodium ion, a potassium ion, or a monoalkyl dialcohol ammonium ion, and even more preferably a lithium ion or an N-butyldiethanol ammonium ion.

In Formula (3), n represents an integer of 1 or more. Among these, n is preferably an integer of 1 or more and 3 or less.

Only one of the compounds represented by Formula (3) may be used alone, or two or more in combination.

Examples of the additional polymerization initiator that can be used include aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

Only one of the additional polymerization initiators may be used alone, or two or more in combination.

### Surfactant

The ultraviolet-curable composition and ultraviolet-curable ink of the present invention preferably contain a surfactant to ensure flatness of the cured product and printed material formed and wettability with a substrate.

As the surfactant, any of nonionic surfactants, such as silicone-based surfactants and fluorine-based surfactants; amphoteric surfactants; and anionic surfactants can be used. Among these, from the viewpoint of preventing unexpected aggregation with other components in the composition and ink of the present invention, a nonionic surfactant is preferred, and from the viewpoint of environmental compatibility, a silicone-based surfactant is more preferred even among the nonionic surfactants. In particular, in a comparison of a silicone-based surfactant and a fluorine-based surfactant, a silicone-based surfactant prevents or reduces aggregation of the other components in the composition and ink of the present invention; thus, a silicone-based surfactant is more preferred.

The silicone-based surfactant is not particularly limited and can be appropriately selected according to the purpose. Among others, a surfactant not decomposed even at a high pH is preferred; examples include side chain-modified polydimethylsiloxane, both terminal end-modified polydimethylsiloxane, one terminal end-modified polydimethylsiloxane, and side chain and both terminal end-modified polydimethylsiloxane. A silicone-based surfactant having a polyoxyethylene group or a polyoxyethylene polyoxypropylene group as a modifying group is particularly preferred because such a surfactant exhibits good properties as an aqueous surfactant in an aqueous medium. A polyether-modified silicone-based surfactant can also be used as the silicone-based surfactant; examples include compounds having a polyalkylene oxide structure introduced into a side chain of the Si portion of dimethylsiloxane.

The fluorine-based surfactant is preferably a fluorine-substituted compound with 2 or more and 16 or less carbons and more preferably a fluorine-substituted compound with 4 or more and 16 or less carbons.

The fluorine-based surfactant is, for example, preferably a perfluoroalkyl sulfonic acid compound, a perfluoroalkyl carboxylic acid compound, a perfluoroalkyl phosphate compound, a perfluoroalkyl alkylene oxide adduct, or a polyoxyalkylene ether polymer compound having a perfluoroalkyl ether group in a side chain because of low foaming properties.

Examples of the perfluoroalkyl sulfonic acid compound include perfluoroalkyl sulfonic acid and perfluoroalkyl sulfonate salts.

Examples of the perfluoroalkyl carboxylic acid compound include perfluoroalkyl carboxylic acid and perfluoroalkyl carboxylate salts.

Examples of the perfluoroalkyl phosphate compound include perfluoroalkyl phosphate esters and perfluoroalkyl phosphate salts.

Examples of the perfluoroalkyl alkylene oxide adduct include perfluoroalkyl ethylene oxide adducts.

Examples of the polyoxyalkylene ether polymer compound having a perfluoroalkyl ether group in a side chain include sulfate salts of a polyoxyalkylene ether polymer having a perfluoroalkyl ether group in a side chain, and salts of a polyoxyalkylene ether polymer having a perfluoroalkyl ether group in a side chain.

Examples of the counter ions of the salts of these fluorine-based surfactants include Li, Na, K, NH₄, NH₃CH₂CH₂OH, NH₂(CH₂CH₂OH)₂, and NH(CH₂CH₂OH)₃.

Among these, the fluorine-based surfactant is more preferably a polyoxyalkylene ether polymer compound having a perfluoroalkyl ether group in a side chain because of its particularly low foaming properties, and particularly preferably fluorine-based surfactants represented by Formulas (5A) and (5B).

CF₃CF₂(CF₂CF₂)ₛ-CH₂CH₂O(CH₂CH₂O)ₜH (5A)

In the compound represented by Formula (5A), to impart water solubility in an aqueous medium, s is preferably an integer of 0 or more and 10 or less, and t is preferably an integer of 0 or more and 40 or less.

CᵣF_{2r + 1}-CH₂CH(OH)CH₂-O-(CH₂CH₂O)_{c}-Z (5B)

In the compound represented by Formula (5B), Z is H, C_{d}F_{2d + 1}, CH₂CH(OH)CH₂-CₑF_{2e + 1}, or C_{f}H_{2f + 1}, d in C_{d}F_{2d + 1} is an integer of 1 or more and 6 or less, e in CH₂CH(OH)CH₂-CₑF_{2e + 1} is an integer of 4 or more and 6 or less, f in C_{f}H_{2f + 1} is an integer of 1 or more and 19 or less, r is an integer of 1 or more and 6 or less, and c is an integer of 4 or more and 14 or less.

As the fluorine-based surfactant, a commercially available product can be used. Examples of such commercially available products include Surflon S-111, S-112, S-113, S-121, S-131, S-132, S-141, and S-145 (available from AGC Seimi Chemical Co., Ltd.); Fluorad FC-93, FC-95, FC-98, FC-129, FC-135, FC-170C, FC-430, and FC-431 (available from Sumitomo 3M Ltd.); Megafac F-470, F-1405, and F-474 (available from DIC Corporation); Zonyl TBS, FSP, FSA, FSN-100, FSN, FSO-100, FSO, FS-300, and UR (available from DuPont de Nemours, Inc.); FT-110, FT-250, FT-251, FT-400S, FT-150, and FT-400SW (available from Neos Corporation); Polyfox PF-136A, PF-156A, PF-151N, PF-154, and PF-159 (available from Omnova Solutions, Inc.); Noigen FN-1287 (available from DKS Co., Ltd.); Unidyne DSN-403N (available from Daikin Industries, Ltd.); and LE-604, LE-605, LE-606, and LE-607 (available from Kyoeisha Chemical Co., Ltd.).

Examples of the amphoteric surfactant include lauryl aminopropionate salts, lauryl dimethyl betaine, stearyl dimethyl betaine, and lauryl dihydroxyethyl betaine.

Examples of the nonionic surfactant include polyoxyethylene alkylphenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, acetylene alcohol derivatives, and acetylene glycol derivatives.

Examples of the anionic surfactant include polyoxyethylene alkyl ether acetate salts, dodecylbenzene sulfonate salts, laurate salts, and polyoxyethylene alkyl ether sulfate salts.

One of these may be used alone, or two or more in combination.

As described above, the silicone-based surfactant is not particularly limited and can be appropriately selected according to the purpose. A polyether-modified silicone-based surfactant having a poly(oxyethylene) group or a poly(oxyethylene) poly(oxypropylene) group as a modifying group exhibits good properties as an aqueous surfactant and thus is particularly preferred.

As such a surfactant, a suitably synthesized product may be used, or a commercially available product may be used. Examples of the commercially available products include products available from BYK-Chemie GmbH: Shin-Etsu Chemical Co., Ltd.: Dow Corning Toray Co., Ltd.: Nihon Emulsion Co., Ltd.: and Kyoeisha Chemical Co., Ltd.

The polyether-modified silicone-based surfactant is not particularly limited and can be appropriately selected according to the purpose. Examples include polyether-modified silicone-based surfactants represented by Formula (6) having a polyalkylene oxide structure introduced into a side chain of the Si portion of dimethylpolysiloxane: 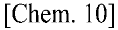 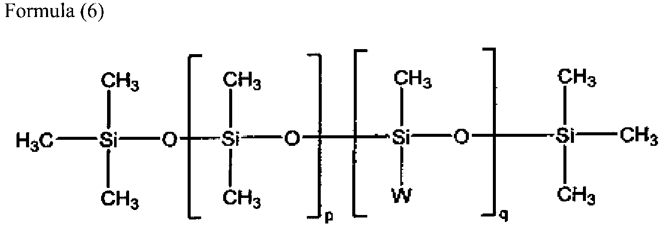 W--R(C₂H₄O),(C₃H₆O)_{b}R'
where p, q, a and b each independently represent an integer of 1 or more, and R and R' each independently represent a hydrocarbon group.

As the polyether-modified silicone-based surfactant, a commercially available product can be used. Examples of the commercially available products include KF-618, KF-642, and KF-643 (Shin-Etsu Chemical Co., Ltd.); SAG001, SAG002, SAG003, SAG005, SAG503, and SAG008 (Nissin Chemical Co., Ltd.); EMALEX-SS-5602 and SS-1906EX (Nihon Emulsion Co., Ltd.); FZ-2105, FZ-2118, FZ-2154, FZ-2161, FZ-2162, FZ-2163, and FZ-2164 (Dow Corning Toray Co., Ltd.); BYK-333, BYK-347, BYK-348, BYK-349, and BYK-378 (BYK-Chemie GmbH); and TSF4440 and TSF4452 (Momentive Performance Materials Inc.).

### Sensitizer

The ultraviolet-curable composition and ultraviolet-curable ink of the present invention may contain a sensitizer.

With a sensitizer present together with the polymerization initiator in the ultraviolet-curable composition and ultraviolet-curable ink, the sensitizer absorbs active energy rays to become excited, and upon contact with the polymerization initiator, promotes decomposition of the polymerization initiator, enabling a more sensitive curing reaction.

The sensitizer may be fat-soluble or water-soluble. A fat-soluble sensitizer can be encapsulated in the radically polymerizable compound particles.

Examples of the sensitizer include aliphatic amines; amines having an aromatic group; cyclic amine compounds, such as piperidine; alkoxy-anthracene compounds; urea-based compounds, such as o-tolylthiourea; sulfur compounds, such as sodium diethylthiophosphate or soluble salts of aromatic sulfinic acids; nitrile compounds, such as N,N'-disubstituted-p-aminobenzonitrile; phosphorus compounds, such as tri-n-butylphosphine or sodium diethyl dithiophosphate; and nitrogen compounds, such as Michler's ketone, N-nitrosohydroxylamine derivatives, oxazolidine compounds, tetrahydro-1,3-oxazine compounds, and condensates of formaldehyde or acetaldehyde and a diamine.

Only one of these sensitizers may be used alone, or two or more in combination.

### Additional Oligomer, Resin, and Monomer

As necessary, the ultraviolet-curable composition and ultraviolet-curable ink of the present invention may contain, in addition to the above components, an optional resin component, an optional oligomer component, and/or an optional monomer component (these are collectively referred to as "additional resin component"). The additional resin component may be encapsulated in the particles of the radically polymerizable compound, may be dissolved in a solvent, or may be dispersed alone or in a state of being complexed with an additional component in the composition or the ink.

### Additional Additive

The ultraviolet-curable composition and ultraviolet-curable ink of the present invention can contain an additional additive as necessary in addition to the above components.

Examples of the additional additive include known additives such as anti-fading agents, emulsion stabilizers, penetration enhancers, ultraviolet absorbers, preservatives, antifungal agents, rust inhibitors, pH adjusters, viscosity modifiers, dispersants, dispersion stabilizers, defoamers, solid wetting agents, and chelating agents. Any of these various additives may be added after preparation or during preparation.

For details of the additional additive, reference can be appropriately made to the description in paragraphs [0088] to [0096] of JP 2010-065205 A and the description in paragraphs [0083] to [0090] of JP 2010-70669 A.

### Content of Each Component

In the ultraviolet-curable composition and ultraviolet-curable ink of the present invention containing water as the solvent, the content is not particularly limited and can be appropriately selected according to the purpose. In the case of using as an inkjet ink, from the viewpoints of drying properties and ejection reliability of the ink, the content of water is usually 10 mass% or more and preferably 20 mass% or more, and usually 90 mass% or less and preferably 80 mass% or less.

In the ultraviolet-curable composition and ultraviolet-curable ink of the present invention containing the water-soluble organic solvent, the content (total content of the water-soluble organic solvent used also as a moisture-retention solvent and the water-soluble organic solvent used as an aqueous medium) is not particularly limited and can be appropriately selected according to the type and purpose of the water-soluble organic solvent to be used. In the case of using as an inkjet ink, from the viewpoints, such as drying properties, ejection reliability, and wettability with a substrate, the content of the water-soluble organic solvent is usually 10 mass% or more, and usually 50 mass% or less and preferably 40 mass% or less.

In particular, in the case of containing propylene glycol as the water-soluble organic solvent, from the viewpoint of moisture retention, the content of propylene glycol in the ultraviolet-curable composition and ultraviolet-curable ink of the present invention is preferably 1 mass% or more, more preferably 3 mass% or more, and even more preferably 5 mass% or more. On the other hand, from the viewpoint of drying properties, the content is preferably 30 mass% or less, more preferably 27 mass% or less, and even more preferably 25 mass% or less.

The total solid content concentration, which includes the components other than the solvent, in the ultraviolet-curable composition and ultraviolet-curable ink of the present invention is not particularly limited and can be appropriately selected according to the purpose. From the viewpoint of coatability, the total solid content concentration is adjusted to usually 40 mass% or less and preferably 35 mass% or less. In the case of using as an inkjet ink, from the viewpoints of drying properties and ejection reliability, the total solid content concentration is adjusted to usually 5 mass% or more, preferably 7 mass% or more, and more preferably 9 mass% or more, and usually 30 mass% or less, preferably 25 mass% or less, more preferably 20 mass% or less, and even more preferably 15 mass% or less.

In the case of using a mixed liquid of water and a water-soluble organic solvent as the solvent, from the viewpoint of improving drying properties and ejection properties during inkjet printing, the ratio of water to the water-soluble organic solvent (total of the water-soluble organic solvent used also as a moisture-retention solvent and the water-soluble organic solvent used as a solvent), water:water-soluble organic solvent, is usually from 1:0.05 to 1:1.5 (mass ratio), preferably from 1:0.1 to 1:1.2 (mass ratio), and more preferably from 1:0.15 to 1:1.1 (mass ratio).

From the viewpoints of the performance and ultraviolet curability of the resulting cured product and printed material, the content of the radically polymerizable compound in the ultraviolet-curable composition and ultraviolet-curable ink of the present invention is usually 3 mass% or more, preferably 5 mass% or more, and even more preferably 7 mass% or more. On the other hand, in the case of using as an inkjet ink, from the viewpoint of ejection stability, the content of the radically polymerizable compound is usually 20 mass% or less, preferably 15 mass% or less, and more preferably 12 mass% or less.

From the same viewpoint, the content of the radically polymerizable compound in the total solid content of the ultraviolet-curable composition and ultraviolet-curable ink of the present invention is usually 30 mass% or more, preferably 50 mass% or more, and more preferably 60 mass% or more, and usually 95 mass% or less, preferably 90 mass% or less, and more preferably 85 mass% or less.

The total solid content in the ultraviolet-curable composition and ultraviolet-curable ink of the present invention can be rephrased as the constituent components of the cured product and printed material formed by the ultraviolet-curable composition and ultraviolet-curable ink of the present invention, and the numerical value ranges described above can be similarly adopted. The content of each component in the total solid content is substantially equivalent to the content of the component in the cured product and printed material formed by the ultraviolet-curable composition and ultraviolet-curable ink of the present invention.

Thus, the content of the radically polymerizable compound in the total solid content of the ultraviolet-curable composition and ultraviolet-curable ink of the present invention being usually 30 mass% or more, preferably 50 mass% or more, and more preferably 60 mass% or more, and usually 95 mass% or less, preferably 90 mass% or less, and more preferably 85 mass% or less can be treated in the same manner as the content of the component derived from the radically polymerizable compound in the cured product and printed material formed by the ultraviolet-curable composition and ultraviolet-curable ink of the present invention being usually 30 mass% or more, preferably 50 mass% or more, and more preferably 60 mass% or more, and usually 95 mass% or less, preferably 90 mass% or less, and more preferably 85 mass% or less.

The same applies to the contents of the colorant and other components described below.

From the viewpoints of improved image density, good fixability, and ejection stability, the content of the colorant in the ultraviolet-curable ink of the present invention is usually 0.1 mass% or more and preferably 1 mass% or more, and usually 8 mass% or less and preferably 6 mass% or less.

From the same viewpoints, the content of the colorant in the total solid content of the ultraviolet-curable ink of the present invention is usually 1 mass% or more and preferably 5 mass% or more, and usually 40 mass% or less and preferably 30 mass% or less.

The content of the compound having the structure represented by Formula (1) and the structure represented by Formula (2) in the ultraviolet-curable composition and ultraviolet-curable ink of the present invention can be appropriately selected according to the required performance of the cured product and printed material to be produced. The content of the compound having the structure represented by Formula (1) and the structure represented by Formula (2) is usually 0.05 mass% or more, preferably 0.1 mass% or more, more preferably 0.3 mass% or more, and even more preferably 0.4 mass% or more, and usually 8 mass% or less, preferably 5 mass% or less, more preferably 3 mass% or less, and even more preferably 2 mass% or less. The content of the compound within this range can sufficiently improve the curing rate, prevent the compound from remaining undissolved in the solvent, and avoid coloration of the cured product and printed material.

From the same viewpoint, the content of the compound having the structure represented by Formula (1) and the structure represented by Formula (2) in the total solid content of the ultraviolet-curable composition and ultraviolet-curable ink of the present invention is usually 0.5 mass% or more, preferably 1 mass% or more, more preferably 2 mass% or more, and even more preferably 3 mass% or more, and usually 20 mass% or less, more preferably 15 mass% or less, and even more preferably 10 mass% or less.

From the viewpoint of curability, the content ratio (mass ratio) of the compound having the structure represented by Formula (1) and the structure represented by Formula (2) to the radically polymerizable compound in the ultraviolet-curable composition and ultraviolet-curable ink of the present invention is preferably 0.001 or more, more preferably 0.003 or more, and even more preferably 0.005 or more. On the other hand, from the viewpoint of storage stability, this content ratio (mass ratio) is preferably 0.4 or less, more preferably 0.3 or less, and even more preferably 0.1 or less.

In the ultraviolet-curable composition and ultraviolet-curable ink of the present invention containing the compound represented by Formula (3), the content of the compound represented by Formula (3) in the ultraviolet-curable composition and ultraviolet-curable ink of the present invention is usually 0.01 mass% or more, preferably 0.03 mass% or more, and more preferably 0.05 mass% or more, and usually 4 mass% or less, preferably 3 mass% or less, more preferably 1 mass% or less, and even more preferably 0.7 mass% or less. The content of the compound represented by Formula (3) within the above range can enhance curability.

From the same viewpoint, the content of the compound represented by Formula (3) in the total solid content of the ultraviolet-curable composition and ultraviolet-curable ink of the present invention is usually 0.05 mass% or more, preferably 0.1 mass% or more, more preferably 0.3 mass% or more, and even more preferably 0.5 mass% or more, and usually 8 mass% or less, preferably 6 mass% or less, and more preferably 5 mass% or less.

In the ultraviolet-curable composition and ultraviolet-curable ink of the present invention containing the compound represented by Formula (3) as the polymerization initiator, from the viewpoint of storage stability, the content ratio (mass ratio) of the compound represented by Formula (3) to the compound having the structure represented by Formula (1) and the structure represented by Formula (2) in the ultraviolet-curable composition and ultraviolet-curable ink of the present invention is preferably 0.01 or more, more preferably 0.03 or more, and even more preferably 0.1 or more. On the other hand, from the viewpoint of curability, this content ratio (mass ratio) is preferably 800 or less, more preferably 200 or less, and even more preferably 60 or less.

In the ultraviolet-curable composition and ultraviolet-curable ink of the present invention containing the compound represented by Formula (3) as the polymerization initiator, from the viewpoint of curability, the content ratio (mass ratio) of the compound represented by Formula (3) to the radically polymerizable compound in the ultraviolet-curable composition and ultraviolet-curable ink of the present invention is preferably 0.005 or more and more preferably 0.01 or more. On the other hand, from the viewpoint of storage stability, this content ratio (mass ratio) is preferably 0.8 or less, more preferably 0.5 or less, even more preferably 0.3 or less, and further even more preferably 0.2 or less.

The total content of all polymerization initiators in the ultraviolet-curable composition and ultraviolet-curable ink of the present invention is usually 0.06 mass% or more, preferably 0.13 mass% or more, and more preferably 0.35 mass% or more, and usually 12 mass% or less, preferably 8 mass% or less, more preferably 4 mass% or less, and even more preferably 2.7 mass% or less. The total content of all the polymerization initiators within the above range can enhance curability.

From the same viewpoint, the total content of all the polymerization initiators in the total solid content of the ultraviolet-curable composition and ultraviolet-curable ink of the present invention is usually 0.55 mass% or more, preferably 1.1 mass% or more, more preferably 2.3 mass% or more, and even more preferably 3.5 mass% or more, and usually 28 mass% or less, preferably 21 mass% or less, and more preferably 15 mass% or less.

In the ultraviolet-curable composition and ultraviolet-curable ink of the present invention containing a surfactant, the content of the surfactant is not particularly limited and can be appropriately selected according to the purpose. From the viewpoint of improving wettability, surface smoothness after coating, and ejection stability during inkjet printing, the content of the surfactant in the ultraviolet-curable composition and ultraviolet-curable ink is usually 0.001 mass% or more, preferably 0.01 mass% or more, and more preferably 0.03 mass% or more, and usually 5 mass% or less, preferably 3 mass% or less, and more preferably 1 mass% or less.

From the same viewpoint, the content of the surfactant in the total solid content of the ultraviolet-curable composition and ultraviolet-curable ink of the present invention is usually 0.01 mass% or more, preferably 0.1 mass% or more, and more preferably 0.2 mass% or more, and usually 10 mass% or less, preferably 5 mass% or less, and more preferably 3 mass% or less.

In the composition and ink of the present invention containing a sensitizer, the content of the sensitizer is usually 0.01 mass% or more, preferably 0.03 mass% or more, and more preferably 0.05 mass% or more, and usually 4 mass% or less, preferably 3 mass% or less, more preferably 1 mass% or less, and even more preferably 0.7 mass% or less. The content of the sensitizer within the above range can sufficiently provide the effect by the sensitizer.

From the same viewpoint, the content of the sensitizer in the total solid content of the composition and ink of the present invention is usually 0.05 mass% or more, preferably 0.1 mass% or more, more preferably 0.3 mass% or more, and even more preferably 0.5 mass% or more, and usually 8 mass% or less, preferably 6 mass% or less, and more preferably 5 mass% or less.

### Method for Producing Ultraviolet-Curable Composition and Ultraviolet-Curable Ink

The method for producing the ultraviolet-curable composition and ultraviolet-curable ink of the present invention is not particularly limited. An example of the method for producing the ultraviolet-curable composition and ultraviolet-curable ink of the present invention is a method of preparing a dispersion liquid in which a radically polymerizable compound is dispersed as particles in a medium (hereinafter the dispersion liquid may be referred to as a "radically polymerizable compound dispersion liquid"), preparing a dispersion liquid in which a colorant, such as a pigment, is dispersed in a medium (hereinafter, the dispersion liquid may be referred to as a "colorant dispersion liquid"), and then mixing the polymerizable compound dispersion liquid, a polymerization initiator, an additional additive, an organic solvent, and if necessary, the colorant dispersion liquid.

An ultraviolet-curable ink with the same performance can be produced even when a colorant is added to the ultraviolet-curable composition of the present invention.

### Preparation of Radically Polymerizable Compound Dispersion Liquid

A known method, such as a high-pressure emulsification method or a phase inversion emulsification method, can be adopted for preparation of the radically polymerizable compound dispersion liquid. In the preparation of the radically polymerizable compound dispersion liquid, any of various known emulsifiers and dispersants may be used as necessary within a range that does not impair the effects of the present invention.

The high-pressure emulsification method is a method in which an aqueous phase, an oil phase, and an amphiphilic substance, such as a surfactant, are premixed and emulsified using a high-pressure emulsifier, such as a homogenizer. The phase inversion emulsification method is a method in which an amphiphilic substance, such as a surfactant, is dissolved or dispersed in an oil phase, and an aqueous phase is added to the oil phase to produce an oil-in-water type emulsion. In the case of using two or more radically polymerizable compounds, they are preferably premixed before preparing the dispersion liquid.

The solid content concentration of the radically polymerizable compound dispersion liquid thus prepared is preferably from about 10 mass% to about 40 mass% from the viewpoint of handling properties.

Two or more radically polymerizable compounds may be used. Each radically polymerizable compound may be separately prepared in a dispersion liquid and then blended at any ratio, but it is preferred to prepare a dispersion liquid after premixing the radically polymerizable compounds. In addition, other components, such as, for example, a polymer that is not radically polymerizable, a polymerization initiator, and a preservative, may be premixed, and then the mixture may be prepared into a dispersion liquid.

### Preparation of Colorant Dispersion Liquid

The colorant dispersion liquid can be prepared by adding and mixing a colorant, such as a pigment, in a solvent, such as water.

From the viewpoints of handling properties and storage stability, the concentration of the colorant, such as a pigment, in the colorant dispersion liquid is usually 5 mass% or more and preferably 10 mass% or more, and usually 40 mass% or less and preferably 35 mass% or less.

For the colorant dispersion liquid, a commercially available product may be used as is.

### Viscosity of Ultraviolet-Curable Composition

The viscosity of the ultraviolet-curable composition of the present invention can be freely adjusted according to the application and form of use. In the case of using the ultraviolet-curable composition of the present invention in an inkjet printer, the viscosity at 25°C is preferably 25 mPa·sec or less, more preferably 20 mPa·sec or less, and even more preferably 10 mPa·sec or less. The lower limit of the viscosity of the ultraviolet-curable composition of the present invention is not particularly limited, but is preferably 1 mPa·sec or more and more preferably 2 mPa·sec or more.

### Viscosity of Ultraviolet-Curable Ink

The viscosity of the ultraviolet-curable ink of the present invention can be freely adjusted according to the application and form of use. In the case of using the ultraviolet-curable ink of the present invention in an inkjet printer, the viscosity at 25°C is preferably 25 mPa·sec or less, more preferably 20 mPa·sec or less, and even more preferably 10 mPa·sec or less. The lower limit of the viscosity of the ultraviolet-curable ink of the present invention is not particularly limited, but is preferably 1 mPa·sec or more and more preferably 2 mPa·sec or more.

### Substrate

The substrate to which the ultraviolet-curable composition and ultraviolet-curable ink of the present invention are applied is not particularly limited; examples include plastic materials, such as polyesters (such as poly(ethylene terephthalate) (PET)) and polyolefins (such as poly(vinyl chloride) (PVC), polyethylene (PE), and polypropylene (PP)); paper; textiles (cloth and fabrics); leather; glass; ceramics; wood; metal; rubber; and composite materials of these. The ultraviolet-curable composition and ultraviolet-curable ink of the present invention can form a cured product and a printed material with good strength and adhesion to these various substrates.

### Cured Product and Printed Material

A cured product and a printed material can be produced by curing the ultraviolet-curable composition and ultraviolet-curable ink of the present invention, respectively.

Examples of the method for curing the ultraviolet-curable composition or ultraviolet-curable ink of the present invention to produce a cured product or a printed material include a method in which the ultraviolet-curable composition or ultraviolet-curable ink is applied onto a substrate using a known method, such as a coater (such as a spin coater or a bar coater) or any of various printing methods, such as inkjet printing, and the substrate is irradiated with an active energy ray. Alternatively, another method can also be used in which the ultraviolet-curable composition or ultraviolet-curable ink is temporarily applied onto a substrate, such as a film, then transferred onto another substrate, and then the substrate is irradiated with an active energy ray. In addition, the cured product or printed material can be patterned by photolithography.

The polymerization initiator containing the compound having the structure represented by Formula (1) and the structure represented by Formula (2) is decomposed by irradiation with an active energy ray, thereby generating radicals and allowing a polymerization reaction of the radically polymerizable compound to proceed.

As a method for curing the ultraviolet-curable composition or ultraviolet-curable ink of the present invention to produce a cured product or a printed material, a method can be used in which the ultraviolet-curable composition or ultraviolet-curable ink is applied onto a substrate, then the substrate is heated and then irradiated with an active energy ray. The heating temperature is preferably 40°C or higher, more preferably 45°C or higher, and even more preferably 50°C or higher. The heating can remove a volatile component, such as water, and tends to enable further enhancement of the curability. From the viewpoint of preventing drying of the ink on the nozzle surface and thermal deterioration of the substrate, the upper limit of the heating temperature is preferably 120°C or lower and more preferably 100°C or lower.

The heating means is not particularly limited; examples include ceramic heaters, halogen heaters, and quartz tube heaters.

The heating may be performed at any timing, such as before, during, or after adhesion of the ultraviolet-curable composition or ultraviolet-curable ink of the present invention to the substrate; however, the heating is more preferably continued throughout all the processes before, during, and after the adhesion.

### Light Source (Active Energy Ray Source)

Mercury lamps, metal halide lamps, gas-solid lasers, and the like are widely known as light sources (active energy ray sources). On the other hand, there is a strong demand for mercury-free light sources at present from the viewpoint of environmental protection; replacement with GaN-based semiconductor ultraviolet light-emitting devices is industrially and environmentally very useful. Furthermore, ultraviolet light-emitting diodes (UV-LED) and ultraviolet laser diodes (UV-LD) are small in size, have a long service life, and are highly efficient and low in cost, and thus are expected to be used as light sources for ultraviolet-curable inkjet printers. Among these, a UV-LED is preferred.

The emission peak wavelength of the active energy ray sources used for irradiation is preferably in a range from 350 to 450 nm. The irradiation energy is preferably 20 J/cm² or less, for example, from 0.5 to 10 J/cm².

There may be one or more emission peak wavelengths within the above wavelength range.

The irradiation with an active energy ray is not limited to the intentional process as described above and may be, for example, sunlight irradiation by outdoor exposure. In a case where the radically polymerizable compound used in the present invention has high reactivity (curability), heating alone may be sufficient without the need for irradiation with an active energy ray. That is, it is sufficient if the ultraviolet-curable composition or ink of the present invention has ultraviolet curability, and the composition or ink is not limited to use in a printing method including irradiating with an active energy ray.

### Inkjet Ink Storage Container

The ultraviolet-curable ink of the present invention can be stored in an ink cartridge or an ink bottle; this eliminates the need for directly touching the ink during operations, such as transporting or replacing the ink, making it possible to prevent staining of fingers or clothing. In addition, this can prevent foreign matter, such as dust, from entering the ink.

The shape, size, material, and the like of the ink storage container itself are not particularly limited and are appropriately selected, for example, to be suitable for an inkjet printer to which the container is applied. Desirably, the ink storage container is made of a light-shielding material or is covered with a light-shielding sheet or the like.

### Inkjet Recording Method

The ultraviolet-curable ink of the present invention can be suitably used in an inkjet recording method.

An inkjet recording method using the ultraviolet-curable ink of the present invention preferably includes: adhering the ultraviolet-curable ink to a substrate by ejecting the ultraviolet-curable ink of the present invention from an ejection nozzle of an inkjet printer; heating the substrate to which the ink is adhered, and irradiating the ink adhered to the substrate with an active energy ray.

It is sufficient if the ink is adhered to the substrate in an atomized form (mist or spray form) in adhering the ultraviolet-curable ink of the present invention to a substrate, and the adhering is not necessarily limited to a method using an inkjet printer.

In the heating, the presence of a heating means generally tends to cause the ink on the nozzle surface to dry, resulting in poor ejection; thus, the heating temperature is preferably 120°C or lower and more preferably 100°C or lower.

### Application

The ultraviolet-curable composition and ultraviolet-curable ink of the present invention provide the cured product and printed material with excellent water resistance and solvent resistance while satisfying the required performance in a well-balanced manner. In the case of using as an ink, the ultraviolet-curable composition and ultraviolet-curable ink of the present invention make it possible to print images excelling in high image quality performance and high cured film performance on various substrates with high productivity. Thus, the ink can be used in various applications, such as posters, road signs, signboards, billboards, various outdoor and indoor display boards, building materials (surface materials, such as exteriors, interiors, walls, floors, ceilings, and windows), exteriors of vehicles (such as automobiles, railway vehicles, and aircraft), surface materials of furniture, OA equipment, and the like, paper printed materials, and textiles.

### Examples

Hereinafter, examples of the present invention will be described. However, the present invention is not limited to these examples.

### Preparation of Radically Polymerizable Compound

A radically polymerizable compound 1 was produced by reacting 0.4 mol of a trimer of hexamethylene diisocyanate, 0.8 mol of dipentaerythritol pentaacrylate, and 0.4 mol of polyethylene glycol monoallyl ether (in Formula (4), Alk is an ethylene group, J is an allyl group, and g is from 30 to 40).

### Preparation of Ink 1

The radically polymerizable compound 1 was kept at 60°C, GENOPOL TX-2 available from RAHN AG as a thioxanthone-based polymerization initiator A and an oxime ester compound represented by Formula (7) (compound having a structure represented by Formula (1) and a structure represented by Formula (2), where R₁ is 2-ethylhexyl group, R₂ and R₃ are bonded to each other to form a benzene ring, R₄ is 2,4,6-trimethylbenzoyl group, R₅ and R₆ are hydrogen atoms, R₇ is bonded to the structure represented by Formula (1), and R₈ and R₉ are hydrogen atoms) as an oxime ester-based polymerization initiator B were added so as to give the composition ratio in Table 1. While the resultant was stirred and mixed, ion-exchanged water preheated to 60°C was added, thereby producing an aqueous dispersion liquid of the radically polymerizable compound 1. The volume-average particle size (D₅₀) of the particles of the radically polymerizable compound 1 in the aqueous dispersion liquid of the radically polymerizable compound 1 measured using a particle size analyzer according to the dynamic light scattering method was 37 nm.

Next, ion-exchanged water, the aqueous dispersion liquid, diethylene glycol ethyl methyl ether and propylene glycol (described as "EM" and "PG," respectively, in Table 1) as water-soluble organic solvents, a compound represented by Formula (3) (where R₁₀ to R₁₂ and R₁₄ to R₁₇ are hydrogen atoms, R₁₃ is Q⁻, Q⁻ is a carboxylate group, Yⁿ⁺ is N-butyldiethanolammonium ion, and n is 1) as a polymerization initiator C, BYK-347, available from BYK Japan KK as a surfactant; and EMACOL SF CYAN AE2034F, available from Sanyo Color Works, Ltd. (described as "Cy" in Table 1), as a pigment dispersion liquid were added and mixed so as to give the composition ratio in Table 1, thereby producing an ink 1.

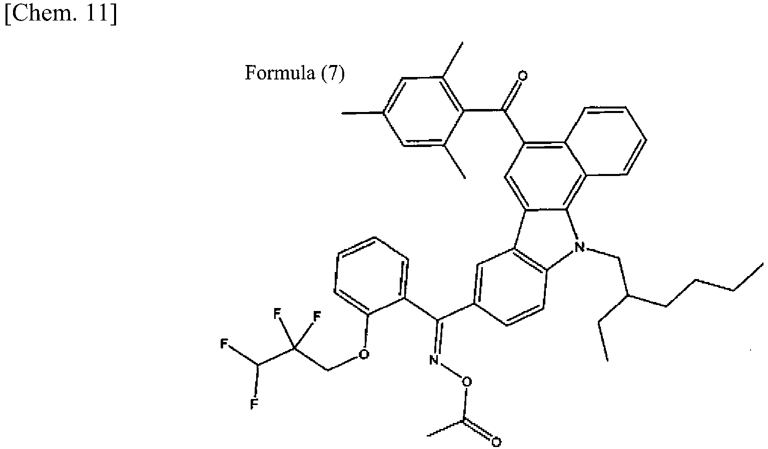

### Preparation of Inks 2 to 4

Inks 2 to 4 were produced in the same manner as the ink 1 except that the following pigment dispersion liquids were used, and the types and blending ratios of the pigment dispersion liquids and the blending ratio of the polymerization initiator C were changed as in Table 1 below.

Pigment dispersion liquid: EMACOL SF MAGENTA AG2172F (described as "Ma" in Table 1) available from Sanyo Color Works, Ltd.

Pigment dispersion liquid: EMACOL SF YELLOW AG2242F (described as "Ye" in Table 1) available from Sanyo Color Works, Ltd.

Pigment dispersion liquid: EMACOL SF BLACK AE2078F (described as "Bk" in Table 1) available from Sanyo Color Works, Ltd.

### Preparation of Ink 5

An ink 5 was produced in the same manner as the ink 1 except that the polymerization initiator A was not added and an oxime ester-based polymerization initiator D represented by Formula (8) (Irgacure OXE01, available from BASF SE; having the structure represented by Formula (1) but not having the structure represented by Formula (2)) was added instead of the polymerization initiator B so as to give the composition ratio in Table 1 below.

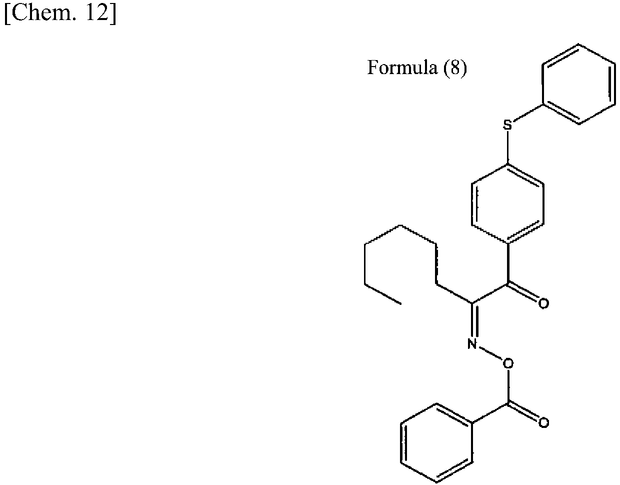

### Preparation of Ink 6

An ink 6 was produced in the same manner as the ink 1 except that the polymerization initiator C was not added.

### Preparation of Ink 7

An ink 7 was produced in the same manner as the ink 1 except that the polymerization initiator B was not added and an α-hydroxyacetophenone-based polymerization initiator E represented by Formula (9) (Irgacure 2959, available from Ciba Specialty Chemicals; having neither the structure represented by Formula (1) nor the structure represented by Formula (2)) was further added at the same timing as the addition of the polymerization initiator C.

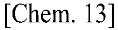

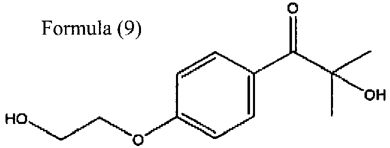

### Preparation of Ink 8

An ink 8 was produced in the same manner as the ink 1 except that a water-soluble monomer (A-GLY-20E, available from Shin-Nakamura Chemical Co., Ltd.) was added so as to give the composition ratio in Table 1 below instead of the aqueous dispersion liquid of the radically polymerizable compound 1.

### Measurement of Absorbance

The absorbance at 385 nm was measured by preparing a sample (pre-dilution composition) for each of the inks 1 to 8 reconstituted without containing the pigment dispersion liquid, diluting the sample 100-fold with water, placing the sample in a silica cell with a thickness of 1 cm, and measuring with a spectrophotometer (U4000, available from Hitachi High-Technologies Corporation). The measurement results of the absorbance are shown in Table 2.

**[Table 1]**

| | Ink Composition Ratio (mass%) | | | | | | | | | | | | |
|---|---|---|---|---|---|---|---|---|---|---|---|---|---|
| | Pigment | | Radically polymerizable compound | | EM | PG | Polymerization Initiator A | Polymerization Initiator B | Polymerization Initiator C | Polymerization Initiator D | Polymerization Initiator E | Surfactant | Water |
| Ink 1 | Cy | 2 | Compound 1 | 10 | 10 | 10 | 0.1 | 0.5 | 0.1 | | | 0.6 | Residue |
| Ink 2 | Ma | 2.5 | Compound 1 | 10 | 10 | 10 | 0.1 | 0.5 | 0.3 | | | 0.6 | Residue |
| Ink 3 | Ye | 1.5 | Compound 1 | 10 | 10 | 10 | 0.1 | 0.5 | 0.3 | | | 0.6 | Residue |
| Ink 4 | Bk | 1.5 | Compound 1 | 10 | 10 | 10 | 0.1 | 0.5 | 0.5 | | | 0.6 | Residue |
| Ink 5 | Cy | 2 | Compound 1 | 10 | 10 | 10 | | | 0.1 | 0.5 | | 0.6 | Residue |
| Ink 6 | Cy | 2 | Compound 1 | 10 | 10 | 10 | 0.1 | 0.5 | | | | 0.6 | Residue |
| Ink 7 | Cy | 2 | Compound 1 | 10 | 10 | 10 | 0.1 | | 0.1 | | 0.5 | 0.6 | Residue |
| Ink 8 | Cy | 2 | A-GLY-20E | 10 | 10 | 10 | 0.1 | 0.5 | 0.1 | | | 0.6 | Residue |

Next, a cured film was formed using each of the inks 1 to 8 by the following method, and water resistance and solvent resistance were evaluated.

### Example 1

An illuminated PET film was used as a substrate, and the ink 1 was applied onto the substrate at a film thickness of 15 µm over an area of 50 cm² using a bar coater. The film was heated at 80°C for 10 minutes and then irradiated with ultraviolet light with an irradiation energy of 7 J/cm² with an LED with a peak wavelength of 385 nm, thereby forming a cured film.

The illuminated PET is a non-absorptive illuminated transparent film composed of poly(ethylene terephthalate) and subjected to a surface treatment.

### Examples 2 to 4 and Comparative Examples 1 to 4

Cured films were produced in the same manner as in Example 1 except that the type of ink was changed as shown in Table 2.

### Evaluation of Water Resistance and Solvent Resistance of Cured Film

Water resistance, solvent resistance, or both were evaluated by the following methods using the cured films produced above.

### Water Resistance Evaluation

Water resistance was evaluated according to the following evaluation criteria by visually observing the presence or absence of damage to the cured film or adhesion of the cured film to absorbent cotton when the absorbent cotton was immersed in ion-exchanged water and the cured film surface was rubbed with the absorbent cotton at a 200 g load. The results are shown in Table 2.
○: The cured film is neither damaged nor adhered to the absorbent cotton.
×: The cured film is damaged or adhered to the absorbent cotton.

### Solvent Resistance Evaluation

Solvent resistance was evaluated according to the following evaluation criteria by visually observing the presence or absence of damage to the cured film or adhesion of the cured film when the cured film surface was rubbed with absorbent cotton at a 200 g load, the absorbent cotton immersed in a liquid obtained by mixing ethanol and water at a ratio of 1:1 (mass ratio). The results are shown in Table 2.

A cured film with water resistance evaluated as × was not tested for solvent resistance.
○: The cured film is neither damaged nor adhered to the absorbent cotton.
×: The cured film is damaged or adhered to the absorbent cotton.
-: Not tested for solvent resistance.

**[Table 2]**

| | Ink type | Compound having structure represented by Formula (1) and structure represented by Formula (2) | Absorbance | Water resistance | Solvent resistance |
|---|---|---|---|---|---|
| Example 1 | Ink 1 | Present | 0.533 | ○ | ○ |
| Example 2 | Ink 2 | Present | 0.868 | ○ | ○ |
| Example 3 | Ink 3 | Present | 0.854 | ○ | ○ |
| Example 4 | Ink 4 | Present | 1.109 | ○ | ○ |
| Comparative Example 1 | Ink 5 | Absent | 0.023 | × | - |
| Comparative Example 2 | Ink 6 | Present | 0.375 | × | - |
| Comparative Example 3 | Ink 7 | Absent | 0.222 | × | - |
| Comparative Example 4 | Ink 8 | Present | 0.042 | × | - |

The following can be seen from Table 2.

The ultraviolet-curable ink of the present invention provides a cured film having good water resistance and good solvent resistance.

In contrast, cured film performance is poor in Comparative Examples 1 and 3, which contain neither a compound having the structure represented by Formula (1) nor the structure represented by Formula (2) as a polymerization initiator; Comparative Example 2, in which the absorbance at a wavelength of 385 nm is less than 0.40; and Comparative Example 4, in which the radically polymerizable compound is not present as particles but dissolved.

As described above, the ultraviolet-curable ink of the present invention can be prepared by adding a colorant to the ultraviolet-curable composition of the present invention. An ultraviolet-curable composition prepared without adding a colorant is also expected to be able to provide effects similar to those of the ultraviolet-curable inks shown in the examples.

Although the present invention has been described in detail with reference to specific aspects, it will be apparent to those skilled in the art that various modifications can be made without departing from the spirit and scope of the present invention.

The present application is based on JP 2023-191702 filed on November 9, 2023, which is incorporated by reference in its entirety.

## Claims

1. An ultraviolet-curable composition comprising at least a radically polymerizable compound, a polymerization initiator, and at least one solvent,
wherein
the radically polymerizable compound is present as particles,
the polymerization initiator comprises a compound comprising a structure represented by Formula (1) and a structure represented by Formula (2), and
when the ultraviolet-curable composition being substantially free of any colorant component, which is hereinafter referred to as "the pre-dilution composition", is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 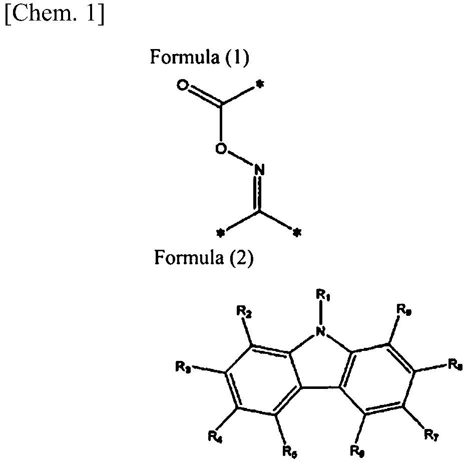 where in Formula (1), * represents a bond to another structure in the compound; and in Formula (2), R₁ to R₉, each independently represents a hydrogen atom, a monovalent organic residue, or a bond to another structure in the compound, among R₁ to R₉, adjacent monovalent organic residues may be bonded to each other to form a ring fused to the carbazole ring in Formula (2); with the proviso that at least one of R₁ to R₉, is a bond to the structure represented by Formula (1).

2. The ultraviolet-curable composition according to claim 1, wherein the at least one solvent comprises water.

3. The ultraviolet-curable composition according to claim 1 or 2, wherein the at least one solvent further comprises an organic solvent.

4. The ultraviolet-curable composition according to claim 1 or 2, further comprising one additional polymerization initiator, wherein the one additional polymerization initiator comprises a compound represented by Formula (3): 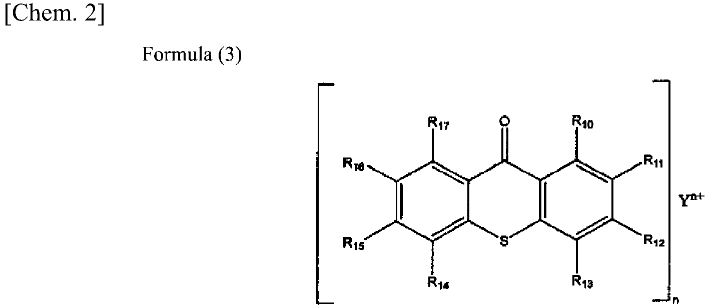 where R₁₀ to R₁₇ each independently represents a hydrogen atom or a substituent, with the proviso that at least one of R₁₀ to R₁₇ is Q⁻, and Q⁻ represents a deprotonated anionic functional group; Yⁿ⁺ represents a counter cation, and n represents an integer of 1 or more.

5. The ultraviolet-curable composition according to claim 4, wherein, in Formula (3), R₁₃ is Q⁻.

6. The ultraviolet-curable composition according to claim 4, wherein, in Formula (3), Q⁻ is a group comprising a carboxylate group or a sulfonylate group at a terminal end, and Yⁿ⁺ is any one selected from the group consisting of an alkali metal ion, an alkaline earth metal ion, an ion derived from an organic amine, and an ammonium ion.

7. The ultraviolet-curable composition according to claim 4, wherein a content ratio (mass ratio) of the compound represented by Formula (3) to the compound comprising the structure represented by Formula (1) and the structure represented by Formula (2) is 0.01 or more and 800 or less.

8. The ultraviolet-curable composition according to claim 1 or 2, further comprising a surfactant, wherein the surfactant is a silicone-based surfactant.

9. A method for producing a cured product, the method comprising:
applying or printing the ultraviolet-curable composition described in claim 1 or 2 onto a substrate surface, and then irradiating the substrate with an active energy ray.

10. A cured product produced by curing the ultraviolet-curable composition described in claim 1 or 2.

11. An ultraviolet-curable ink comprising at least a radically polymerizable compound, a polymerization initiator, a colorant, and at least one solvent, wherein
the radically polymerizable compound is present as particles,
the polymerization initiator comprises a compound comprising a structure represented by Formula (1) and a structure represented by Formula (2), and
when the ultraviolet-curable ink being substantially free of the colorant component, which is hereinafter referred to as "the pre-dilution composition", is diluted 100-fold relative to a total mass of the pre-dilution composition using a solvent with the highest content mass proportion among the at least one solvent, an absorbance measured at a wavelength of 385 nm with an optical path length of 1 cm is 0.40 or more; 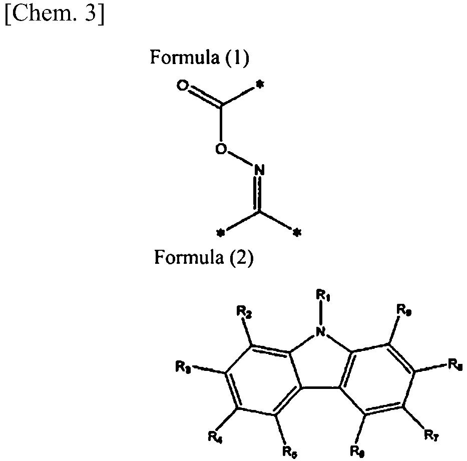 where in Formula (1), * represents a bond to another structure in the compound; and in Formula (2), R₁ to R₉, each independently represents a hydrogen atom, a monovalent organic residue, or a bond to another structure in the compound. among R₁ to R₉, adjacent monovalent organic residues may be bonded to each other to form a ring fused to the carbazole ring in Formula (2); with the proviso that at least one of R₁ to R₉, is a bond to the structure represented by Formula (1).

12. The ultraviolet-curable ink according to claim 11, wherein the at least one solvent comprises water.

13. The ultraviolet-curable ink according to claim 11 or 12, wherein the at least one solvent further comprises an organic solvent.

14. The ultraviolet-curable ink according to claim 11 or 12, further comprising one additional polymerization initiator, wherein the one additional polymerization initiator comprises a compound represented by Formula (3): 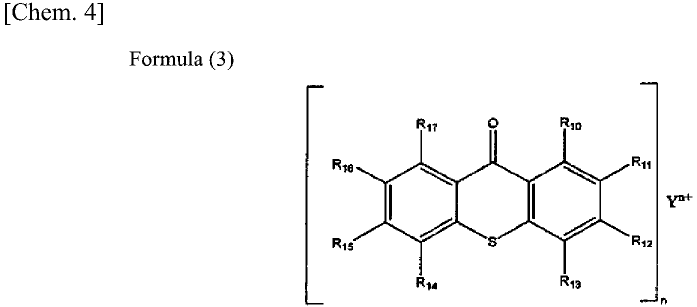 where R₁₀ to R₁₇ each independently represents a hydrogen atom or a substituent, with the proviso that at least one of R₁₀ to R₁₇ is Q⁻, and Q⁻ represents a deprotonated anionic functional group; Yⁿ⁺ represents a counter cation, and n represents an integer of 1 or more.

15. The ultraviolet-curable ink according to claim 14, wherein, in Formula (3), R₁₃ is Q⁻.

16. The ultraviolet-curable ink according to claim 14, wherein, in Formula (3), Q⁻ is a group comprising a carboxylate group or a sulfonylate group at a terminal end, and Yⁿ⁺ is any one selected from the group consisting of an alkali metal ion, an alkaline earth metal ion, an ion derived from an organic amine, and an ammonium ion.

17. The ultraviolet-curable ink according to claim 14, wherein a content ratio (mass ratio) of the compound represented by Formula (3) to the compound comprising the structure represented by Formula (1) and the structure represented by Formula (2) is 0.01 or more and 800 or less.

18. The ultraviolet-curable ink according to claim 11 or 12, further comprising a surfactant, wherein the surfactant is a silicone-based surfactant.

19. A method for producing a printed material, wherein the ultraviolet-curable ink described in claim 11 or 12 is applied or printed onto a substrate surface, and then the substrate is irradiated with an active energy ray.

20. A printed material produced by curing the ultraviolet-curable ink described in claim 11 or 12.
